# EUROPEAN PATENT SPECIFICATION

(11) **EP 1 930 893 B1**
(45) Date of publication and mention of the grant of the patent: **02.11.2011**
(21) Application number: 06797161.4
(22) Date of filing: 31.08.2006
(51) Int. Cl.: G11B 7/24, G11B 7/26

(54) **OPTICAL DISC AND METHOD FOR MANUFACTURING SUCH OPTICAL DISC**
OPTISCHER DATENTRÄGER UND VERFAHREN ZUM HERSTELLEN EINES SOLCHEN OPTISCHEN DATENTRÄGERS
DISQUE OPTIQUE ET PROCÉDÉ DE FABRICATION D UN TEL DISQUE OPTIQUE

(30) Priority: 31.08.2005 JP 2005252426; 29.09.2005 JP 2005284693; 29.09.2005 JP 2005284692; 28.08.2006 JP 2006230545; 29.08.2006 JP 2006232021
(43) Date of publication of application: 11.06.2008
(73) Proprietor: FUJIFILM Corporation, Minato-ku Tokyo 106-8620 (JP)
(72) Inventor: SHIBATA, Michihiro, Odawara-shi, Kanagawa 2500001 (JP); KUBO, Hiroshi, Minato-ku Tokyo 107-0052 (JP)
(74) Representative: Klunker . Schmitt-Nilson . Hirsch
(86) International application number: PCT/JP2006/317201
(87) International publication number: WO 2007/026813

(56) References cited:
- EP-A- 1 274 084
- EP-A- 1 308 938
- WO-A-2005/031727
- JP-A- 10 112 068
- JP-A- 63 300 441
- JP-A- 2003 016 649
- JP-A- 2004 039 013
- JP-A- 2005 149 645
- US-A1- 2001 026 531
- US-A1- 2003 179 674

## Description

### Field of Invention

The present invention relates to an optical disc capable of recording and reproducing information using laser light, and more particularly, to an optical disc on which a drawing of a visible image can be performed using laser light. In addition, the invention relates to a method for forming an optical disc.

### Description of the Related Art

In a representative structure of a write-once type compact disc (referred to as a CD-R) on which information can be recorded once using laser light, a recording layer (i.e., an information recording layer) formed by using an organic dye on a transparent disk shape substrate, a light reflective layer formed of metal such as gold, and a protection layer formed by using a resin material are laminated in this order. An information recording on this CD-R is performed by irradiating near infrared laser light (e.g., having a wavelength of 780 nm) onto a CD-R. An irradiated part of the information recording layer absorbs the light and its temperature is locally increased, so that physical or chemical changes (e.g., generation of a pit) are generated to change its optical characteristics. As a result, information is recorded.

Recently, optical recording media having a higher recording density and called a write-once type digital versatile disc (referred to as DVD-R) has been proposed and commercially used. The DVD-R has a structure obtained by bonding two discs, of which a disc is manufactured by forming an information recording layer including dyes on a transparent disk shape substrate having a guide groove (a pre-groove) for tracking the irradiated laser light, in which the range of the track pitch thereof is 0.74 to 0.8 µm, which is narrower than that of the CD-R, typically forming a reflective layer on the information recording layer, and forming a protection layer as necessary. Alternatively, the DVD-R has a structure obtained by bonding a disc having the above-described structure and a disc-shaped protection substrate having the same shape as that of the disc so that the information recording layer is interposed inside (adhered to the protection substrate) using an adhesive. Recording and reproduction of information to/from the DVD-R is performed by irradiating visible laser light (having a wavelength of 630 to 680 nm), so that a higher density recording can be performed in comparison with CD-R.

It is known that a label, on which visible information such as a title of music data recorded on the recording surface or an identification title for identifying the recorded data is printed, may be attached on a surface opposite to the recording surface of the above optical disc on which music data are recorded. Such an optical disc is manufactured by previously printing the titles or the like on a circular label sheet using a printer or the like and attaching the label sheet on a surface opposite to the recorded surface of the optical disc.

When an optical disc having a desired visible image such as the above titles printed on the label surface (i.e., a surface opposite to a surface onto which laser light is irradiated during recording or reproduction) is manufactured, a printer should be prepared in addition to an optical disc drive. Therefore, it is necessary to perform cumbersome works such as drawing out the optical disc from the optical disc drive or attaching the printed label sheet printed by the separately prepared printer after the recording is performed on a recording surface of an optical disc using an optical disc drive.

In view of this, an optical disc recording apparatus capable of drawing an image on the label surface as well as recording and reproducing the information by using laser light has been proposed (as disclosed in Patent Document 1). This optical disc recording apparatus is made for an optical disc having a thermosensitive layer on the label surface, and makes a visible image by scanning a laser pickup and imagewisely irradiating laser light onto the thermosensitive layer (or an image recording layer) to change the color of the irradiated portions.

In addition, an optical disc having an ink receiving layer (a printing layer) on a label surface is also commercially available. Users can print a photograph or an image on this printing layer using an ink-jet printer or the like.

However, since users should acquire an ink-jet printer for forming an image on such an optical disc, the optical disc of this kind causes a cost burden to users. Processes of recording information on the optical disc and then transferring it to the ink jet printer to form an image are cumbersome to users. In addition, when information is recorded on a plurality of optical discs and images are provided for them, such processes become more complicated.

Accordingly, an image forming apparatus and image forming method, capable of recording a high contrast ratio image on the optical disc in addition to an information recording (a digital data recording) for a recording surface has been proposed (as disclosed in Patent Document 2). However, this image forming apparatus and image forming method lacks accuracy and stability because a drawing thereby is performed without tracking. This shortcoming can be overcome by loading information for the drawing into the optical disc and reading the information using a recorder.

On the other hand, various kinds of optical discs capable of representing visible information using a contrast caused by difference of reflection between a laser-light-irradiated part and a non-laser-light-irradiated-part on a surface opposite to the information recording layer for recording digital information have been proposed (for example, as disclosed in Patent Documents 3 to 5).

In an optical disc having the image recording layer, an inner circle of the image recording layer is not a perfect circle but a slightly distorted circle. Therefore, when a user tries to perform an image drawing to an inner circumferential region of the image recording layer, it would be locally projected toward inside. Therefore, appearance of image recording layer may be deteriorated in its inner circumferential region. In addition, when a prepit or a pregroove for recording disc information is provided between the inner circumference of the image recording layer and a center hole (for example, a portion which resides outside a region of a diameter of 21 mm to inside and a region of a diameter of 24 mm), and an image is drawn to the inner circumference of the image recording layer, the prepit or the pregroove may be badly influenced, and finally, errors may occur during the reading operation.

On the other hand, it is possible to perform a higher quality drawing by forming a prepit on the image recording layer of the optical disc and making the disc drive to recognize whether or not the image recording layer of the optical disc is, or by storing information on optimal drawing conditions for each disc using the prepit and reading the information when the image is drawn to perform the drawing based on these conditions. In addition, although the prepit region is formed in, for example, the inner circumference of the optical disc (within a diameter range between 21 and 24 mm), a problem may occur in the signal reading when the image recording layer is also formed on the prepit region. In other words, there may be following differences if the image recording layer is not provided in an upper layer of the prepit region. When the image recording layer is not provided in an upper layer of the prepit region, a reflectance of a prepit portion is lower than that of a portion which resides between the prepits, so that the signal is generated based on these reflectance differences, equalized, and decoded to obtain prepit information. On the contrary, when the image recording layer is provided in an upper layer of the prepit region, the reflectance of a prepit portion is higher that that of a portion which resides between the prepits, so that the polarity of the generated signal is reversed. As a result, the generated signal cannot be used as prepit information when decoded in this condition.

The optical disc recording apparatus is necessary to recognize the optical disc when the image is drawn on a label surface. However, the optical discs disclosed in Patent Documents 3 to 5 do not provide a means for recognizing the optical disc in the optical disc recording apparatus.
Patent Document 1: Japanese Patent Application Laid-open (JP-A) No. 2003-203348
Patent Document 2: Japanese Patent Application Laid-open (JP-A) No. 2004-005848
Patent Document 3: Japanese Patent Application Laid-open (JP-A) No. 2000-113516
Patent Document 4: Japanese Patent Application Laid-open (JP-A) No. 2001-283464
Patent Document 5: Japanese Patent Application Laid-open (JP-A) No. 2000-173096

### DISCLOSURE OF INVENTION

### Problems to be solved

The present invention is achieved in consideration of the conventional problems described above.

### Means to solve the problems

The invention provides an optical disc comprising the features of claim 1.

Further, a preferred aspect of the invention provides (claim 2) an optical disc comprising a substrate and an image recording layer onto which a visual image can be drawn by irradiation of laser light and which is formed on the substrate, wherein the substrate comprises prepits provided on a surface of the substrate on which the image recording layer is formed, and an average depth (hₚ) of the prepits is in a range of 100 to 400 nm. When the range is adjusted to be in the range of 100 to 400 nm, signal amplitudes of detected signals become larger and thus the accuracy of reading of the signals can be increased. More specifically with regard to the average depth hₚ of the prepit, when the region for forming the prepit resides inner side than an image recording layer formation region, the average depth hₚ of the prepit is preferably in a range of 100 to 250 nm, and is more preferably in a range of 100 to 170 nm. The prepit can be designed to be wider when the prepit resides inner side as described above since such configuration provides better signal characteristics comparing to a configuration in which a dye-containing recording layer is formed on the region for forming the prepit as described in the followings.
On the other hand, when at least one portion of the image recording layer is formed on the prepit, the average depth hₚ of the prepit is preferably in a range of 150 to 400 nm, more preferably in a range of 150 to 350 nm, still more preferably in a range of 200 to 330 nm, far more preferably in a range of 230 to 330 nm, and particularly preferably in a range of 230 to 300 nm. These ranges can be preferable in view of increasing the accuracy of reading of the signals because returned light generated after the irradiation of the laser light to the prepit may have influence of the dye when the image recording layer is formed on the prepit.
A further aspect of the invention further provides (claim 3) an optical disc comprising a substrate and an image recording layer onto which a visual image can be drawn by irradiation of laser light and which is formed on the substrate, wherein the substrate comprises prepits provided on a surface of the substrate on which the image recording layer is formed, and an average half width (W) of the prepits is in a range of 200 to 500 nm.
The invention (claim 1) provides an optical disc comprising a substrate and an image recording layer onto which a visual image can be drawn by irradiation of laser light and which is formed on the substrate, wherein the substrate comprises prepits provided on a surface of the substrate on which the image recording layer is formed, a ratio (h₁/h₂) of an average thickness (h₁) of the image recording layer at a convex portion of the prepits relative to an average thickness (h₂) of the image recording layer at a concave portion of the prepits is in a range of 0.1 to 0.9, and a depth (hₚ+h₁-h₂) of depression of the image recording layer at the concave portion of the prepits is in a range of 70 to 250 nm.
This aspect of the invention has the feature of providing product information regarding the optical disc or information regarding image drawing to the prepit so as to make an optical disc recording apparatus be capable of recognizing the optical disc. Further, since the optical disc of the invention satisfy the specific condition as described above, returned light obtained by irradiating laser light onto the optical disc can be sufficiently obtained and thus the signal detection can be easily performed. Further, the invention can reveal particularly excellent image drawing property by using the information regarding image drawing. Furthermore, the above-described specific shape of the prepit enables making signal amplitudes of detected signals be larger so as to increase the accuracy of reading of the signals.
While each of the embodiments has the effect of obtaining the returned light to easily perform the signal detection, the accuracy of the signal detection can be further increased when any of these embodiments are used in combination. namely, it is further preferable that the invention has any one of the possible configurations of the combination of the embodiments.

It is preferable that at least one of the following embodiments (1) to (8) is further applied to the optical disc of the third aspect of the invention.

(1) An embodiment in which the prepit is formed at an inner circumference in the inner portion of the disc relative to the region in which the image forming layer is formed.
(2) An embodiment in which at least one portion of the image forming layer is formed on the region in which the prepit is formed.
(3) An embodiment in which the average half width (W) of the prepits is in a range of 200 to 500 nm. When the average half width (W) is in a range of 200 to 500 nm, returned light generated after the irradiation of the laser light to optical disc can be sufficiently obtained. Further, when the optical disc is this embodiment, a crosstalk between tracks can be made smaller and a sufficient signal amplitude can be obtained.
(4) An embodiment in which a ratio (h₁/h₂) of an average thickness (h₁) of the image recording layer at a convex portion of the prepits relative to an average thickness (h₂) of the image recording layer at a concave portion of the prepits is in a range of 0.1 to 0.9, and a depth (hₚ+h₁-h₂) of depression of the image recording layer at the concave portion of the prepits is in a range of 70 to 250 nm. When the (h₁/h₂) and the (hₚ+h₁-h₂) are within the above ranges, returned light generated after the irradiation of the laser light to optical disc can be sufficiently obtained. Further, when the optical disc is this embodiment, the surface of the image recording layer onto which a reflective layer is formed has an appropriate convex portion and an appropriate concave portion to read the laser light so as to obtain an excellent reproduced signal.
(5) An embodiment in which a reflective layer is formed along the image recording layer and the depth (hₚ+h₁-h₂) of depression of the image recording layer at the concave portion of the prepits is in a range of 100 to 200 nm. When the (hₚ+h₁-h₂) is within the above range, returned light generated after the irradiation of the laser light to optical disc can be sufficiently obtained. Further, when the optical disc is this embodiment, an excellent reproduced signal can be obtained.
(6) An embodiment in which the image recording layer comprises a dye compound. When the optical disc is this embodiment, the optical disc can be formed to a so-called dye-type optical disc. Since the dye-type optical disc provides a distinctive prepit, it is possible to provide sufficient contrast and visibility to images.
(7) An embodiment in which the image recording layer is formed by spin coating a liquid comprising the dye compound. The formation of the optical disc by spin coating enables easily forming the image recording layer and making the optical disc being high productivity.
(8) An embodiment in which a thickness of the substrate is in a range of 0.5 to 1.1 mm. When the thickness of the substrate is in a range of 0.5 to 1.1 mm, the drawing using a laser mounted to a DVD-R drive, a DVD+R drive, a DVD recorder or the like becomes possible.
(9) An embodiment in which the image recording layer is a layer at which visual information is recorded by irradiating the laser light to substantially the same tracks a plurality of times, and the recording of the visual information is conducted by detecting returned light generated after the irradiation of the laser light to the prepits. When the optical disc is this embodiment, a drive or a recorder can recognize the optical disc as one to which c images can be drawn. Further, contrast of drawn images can be improved by the plurality of times of the irradiation.
(10) An embodiment in which the image recording layer is a layer at which visual information is recorded by irradiating the laser light to substantially the same tracks a plurality of times with fluctuating the laser light in a radial direction, and the recording of the visual information is conducted by detecting returned light generated after the irradiation of the laser light to the prepits. When the optical disc is this embodiment, the contrast of drawn images can be further improved.

The invention further provides (claim 10) a method for forming an optical disc comprising: preparing the stamper; preparing, by using the stamper, a substrate which has prepits on a surface on which an image recording layer is to be provided; and forming the image recording layer on the surface of the substrate having the prepits.
The method for forming an optical disc enables efficiently manufacturing the optical disc of the invention.

Fig. 1A is a partial cross-sectional view illustrating a layer structure of an optical disc according to an example useful for the understanding of the present invention, (first aspect).
Fig. 1B is a partial cross-sectional view illustrating a layer structure of an optical disc according to the invention (second and third aspect).
Fig. 2A is a diagram illustrating an optical disc viewed from an image recording layer according to an example useful for the understanding of the invention.
Fig. 2B is a partial cross-sectional view illustrating an example of a layer structure including a substrate, an image recording layer, and a reflective layer according to the invention.
Fig. 2C is a top plan view illustrating an optical disc according to a third aspect of the invention.
Fig. 3 is a block diagram illustrating an exemplary configuration of an optical disc recording apparatus capable of treating an optical disc of the invention.
Fig. 4 is a diagram illustrating a configuration of an optical pickup included in the above optical disc recording apparatus.
Fig. 5 is a diagram for describing contents of an image data used to form a visible image for an image recording layer of the optical disc using the optical disc recording apparatus.
Fig. 6 is a diagram for describing contents of laser light irradiation control for representing an image gradation when a visible image is formed on an image recording layer of an optical disc of the invention by the optical disc recording apparatus.
Fig. 7 is a diagram for describing a method of controlling laser light when a visible image is formed on an image recording layer of the optical disc by the optical disc recording apparatus.
Fig. 8 is a diagram for describing contents of laser power control by a laser power control circuit included in the optical disc recording apparatus.
Fig. 9 is a diagram illustrating returned laser light for laser light irradiated to an image recording layer of the optical disc from an optical pickup of the optical disc recording apparatus.
Fig. 10 is a diagram illustrating an FG pulse generated according to a rotation amount of a spindle motor by a frequency generator 21 included in the optical disc recording apparatus and a clock signal generated according to the FG pulse.
Fig. 11 is a flowchart for describing operations of the optical disc recording apparatus.
Fig. 12 is a flowchart for describing operations of the optical disc recording apparatus.
Fig. 13 is a diagram illustrating a disk ID recorded in the image recording layer of the optical disc.
Fig. 14 is a diagram illustrating a shape of the returned light for the laser light received by an photo-receiving device of the optical pickup of the optical disc recording apparatus.
Fig. 15A is a diagram for describing a case where a large size of a beam spot diameter of laser light irradiated on the image recording layer of the optical disc by the optical pickup of the optical disc recording apparatus.
Fig. 15B is a diagram for describing a case where a small size of a beam spot diameter of laser light irradiated on the image recording layer of the optical disc by the optical pickup of the optical disc recording apparatus.
Fig. 16 is a diagram for describing a method of detecting whether or not a laser light irradiation position of the optical disc recording apparatus passes a reference position of the optical disc.
Fig. 17 is a diagram for describing a method of detecting whether or not a laser light irradiation position of the optical disc recording apparatus passes a reference position of the optical disc.
Fig. 18 is a timing chart for describing operations of the optical disc recording apparatus when a visible image is formed by irradiating laser light onto an image recording layer of the optical disc.
Fig. 19 is a diagram illustrating an image recording layer of the optical disc when laser light is irradiated by the optical disc recording apparatus.
Fig. 20 is a top plan view illustrating an optical disc having a print region or the like according to the third aspect of the invention.
Fig. 21 is a partial cross-sectional view illustrating an optical disc having a print region or the like according to the third aspect of the invention.

### DETAILED DESCRIPTION OF THE INVENTION

Hereinafter, embodiments of the present invention will be described. Particularly, an optical disc that can be used in a signal processing method, a signal processing apparatus, an image drawing method, and an optical disc recording apparatus according to the invention will be described.

An optical disc according to the invention has an image recording layer capable of drawing a visible image by irradiating laser light.

According to the first aspect (an example) of the invention, the optical disc has disc information recorded by a prepit or pregroove formed in an inner side of an image drawing region of the image recording layer. Advantageously, the image recording layer includes an image drawing region where an image is drawn and an image drawing prohibited region where the drawing of an image is inhibited.
More specifically, the prepit or pregroove is formed on a surface of a substrate adjacent to the image recording layer, as will be described later.

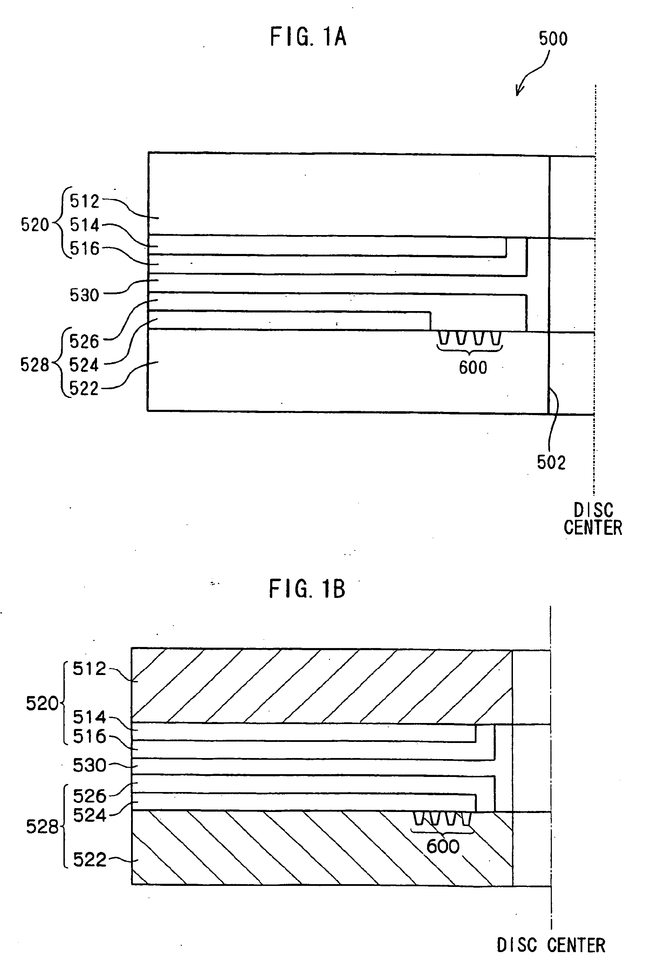

Fig. 1A is a partial cross-sectional diagram schematically illustrating a layer structure of an exemplary optical disc according to a first aspect (an example useful for understanding the invention). As shown in Fig. 1A, the optical disc 500 according to a first aspect of the invention includes a first lamination body 520 formed by stacking an information recording layer 514 and a first reflective layer 516 in this order on a first substrate 512, a second lamination body 528 formed by stacking an image recording layer 524 where a visible image is recorded by irradiating laser light and a second reflective layer 526 in this order on a second substrate 522, and an adhesive layer 650 through which the first and second lamination bodys 520 and 528 are adhered such that the first and second reflective layers 516 and 526 face to each other. In addition, a prepit (or a pregroove) 600 is formed in an inner circumference from a formation region of the image recording layer 524 of the second substrate 522.

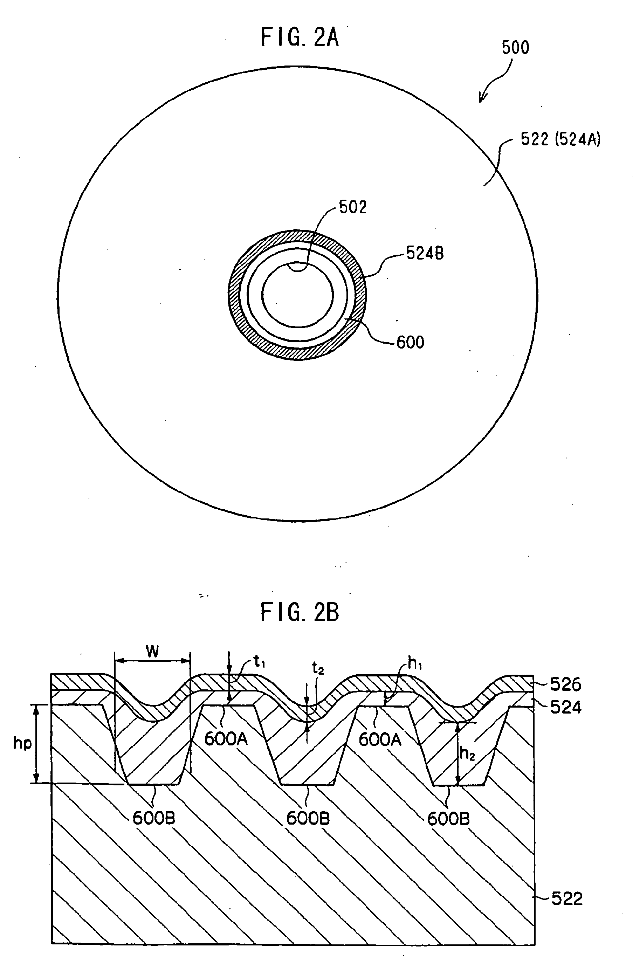

Fig. 2A is a diagram illustrating the optical disc 500 of Fig. 1A viewed from the second substrate 522. The formation region of the image recording layer 524 includes an image drawing region 524A where an image is drawn and an image drawing prohibited region 524B where the drawing of an image is prohibited, as shown in Fig. 2A. The image drawing region 524A and the image drawing prohibited region 524B are virtual regions that cannot be distinguished from other regions in the image recording layer 524. In addition, the information regarding the position of the image drawing prohibited region 524B may be recorded on the prepit 600. The optical disc recording apparatus, which will be described below, may detect the prepit 600 to recognize the information regarding the position of the image drawing prohibited region and performs a control of the image drawing not to draw an image in the image drawing prohibited region.

As described above, although the optical disc according to the invention has the image drawing prohibited region, where an image drawing is prohibited, in the formation region of the image recording layer, this image drawing prohibited region is preferably located between the image drawing region and the prepit (or pregroove) as shown in Fig. 2A. Errors generated when the prepit (or pregroove) is read can be prevented by forming the image drawing prohibited region in that location. In addition, when the prepit (or pregroove) is not provided, appearance cannot be damaged by prohibiting the image drawing in the image recording layer near an inner circumferential edge where its shape is not a perfect circle.

Although the image drawing prohibited region depends of the size of the formation region of the image recording layer, the image drawing prohibited region is preferably formed within a radius range between 23.5 and 25.0 mm in the optical disc, and more preferably, within a radius range between 24.0 and 24.5 mm. For example, if the inner circumferential diameter of the image recording layer is 20.0 mm, a region within a radius range between 20.0 mm to 20.5 mm can be set as the image drawing prohibited region. In addition, when an outer circumference of the prepit formation region has a radius of 24.0 mm, a radius range between 24.0 and 24.5 mm may be set as the image drawing prohibited region.

An optical disc according to the second aspect of the invention is **characterized in that** a reflectance of the prepit region is higher than that of an inter-prepit region because information on the optical disc is recorded by the prepit in an image recording layer formation region. In addition, the prepit is formed on a surface of an image recording layer side of a substrate most adjacent to the image recording layer.
According to the invention, since information on the drawing of the image recording layer such as a drawing laser power or a light-emitting pattern can be recorded on the prepit, a signal detection relating to the image recording layer can be easily performed. In addition, a different drawing condition may be previously recorded for each optical disc as prepit information, and the drawing can be performed with an optical drawing condition based on this prepit information, so that a high drawing characteristic can be implemented. Information obtained from the prepit may include manufacturer's information and the like. In addition, the most adjacent substrate is a substrate having no pit formed to read the optical information or a substrate more adjacently disposed than an information recording layer contributing to a writing and reproduction of the optical information.

Fig. 1B is a partial cross-sectional view illustrating an example of a layer structure of an optical disc 500 according to second and third aspects of the invention. The optical disc 500 includes a first lamination body 520 formed by depositing an information recording layer 514 and a first reflective layer 516 in this order on a first substrate 512, the second lamination body 528 formed by depositing an image recording layer 524 where a visible image is recorded by irradiating laser light and a second reflective layer 526 in this order on a second substrate 522, an adhesive layer 530 through which the first and second lamination bodies 520 and 528 are bonded such that the first and second reflective layers 516 and 526 face to each other. In addition, a prepit is provided in a surface on which the image recording layer is formed in the second substrate 522.

In the optical disc according to the second aspect of the invention, the image recording layer 524 is formed to a region where the prepit 600 is provided, as shown in Fig. 1B. In other words, the image recording layer 524 is formed in a region of the prepit 600.

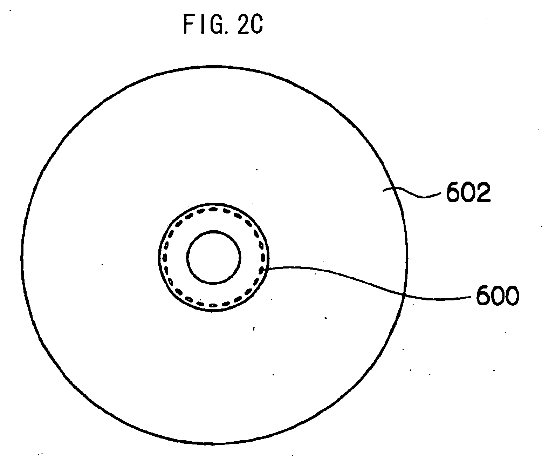

According to the third aspect of the invention, a region for forming the prepit is not particularly limited. In other words, the prepit may be formed in an inner circumferential side from a region where the image recording layer is formed. In other words, as shown in Fig. 2C, a region where the prepit 600 is formed (i.e., a prepit formation region) may be disposed in an inner circumferential side from a region where the image recording layer is formed (i.e., an image recording layer formation region 602). As a result, since the prepit is not buried by a dye compound, a signal can be easily detected.

In addition, according to the third aspect of the invention, a margin should be prepared between an outermost circumference of a pit formation region and an innermost circumference of the image recording layer formation region in order not to form the image recording layer on the prepit formation region. From the viewpoint of a larger image recording layer formation region, a region where the prepit 600 is formed may be partially superposed with the image recording layer 524 formed thereon as shown in Fig. 1B. In other words, at least a part of the image recording layer 524 may be formed on the prepit 600. When at least a part of the image recording layer 524 may be formed on the prepit 600, yield of the process of manufacturing the optical disc can be increased since the position for forming the image recording layer 24 can be relatively flexibly determined.

Particularly, according to a third aspect of the invention, when the prepit is formed on an inner circumference of the substrate, the prepit may be formed within a radius range between 21 and 24 mm from the center of the substrate.

As shown in Fig. 2B, an average depth hₚ of the prepit 600 is preferably in a range of 100 to 400 nm. When the range is adjusted to be in the range of 100 to 400 nm, signal amplitudes of detected signals become larger and thus the accuracy of reading of the signals can be increased. More specifically with regard to the average depth hₚ of the prepit, when the region for forming the prepit resides inner side than an image recording layer formation region 602, the average depth hₚ of the prepit is preferably in a range of 100 to 250 nm, and is more preferably in a range of 100 to 170 nm. The prepit can be designed to be wider when the prepit resides inner side as described above since such configuration provides better signal characteristics comparing to a configuration in which a dye-containing recording layer is formed on the region for forming the prepit as described in the followings. On the other hand, when at least one portion of the image recording layer 524 is formed on the prepit 600, the average depth hₚ of the prepit is preferably in a range of 150 to 400 nm, more preferably in a range of 150 to 350 nm, still more preferably in a range of 200 to 330 nm, far more preferably in a range of 230 to 330 nm, and particularly preferably in a range of 230 to 300 nm. These ranges can be preferable in view of increasing the accuracy of reading of the signals because returned light generated after the irradiation of the laser light to the prepit may have influence of the dye when the image recording layer 524 is formed on the prepit 600.

An average half width W measured in a radial direction of the prepit is preferably in a range of 200 to 500 nm, is more preferably in a range of 250 to 450 nm, and is further preferably in a range of 390 to 440 nm. As a result of the average half width W being in the range of 200 to 500 nm, a crosstalk between tracks can be made smaller and a sufficient signal amplitude can be obtained. A length (i.e., a half width) measured in a circumferential direction of the prepit 600 may be appropriately set as it depends on information to be recorded.

In addition, a ratio (h₁/h₂) of an average thickness (h₁) of the image recording layer 524 on a prominence 600A of the prepit 600 relative to an average thickness (h₂) of the image recording layer 524 on a depression 600B of the prepit 600 is preferably in a range of 0.1 to 0.9. The depth (hₚ+h₁-h₂) of depression of the image recording layer 524 on the depression of the prepit 600 is preferably in a range of 70 to 250 nm.
As a result of maintaining "h₁/h₂" and "h₂/hₚ+h₁" within the above ranges, a surface where the image recording layer 524 and the reflective layer 526 are to be formed can have an appropriate prominence and depression and obtain an excellent reproduction signal. More preferably, the range of "h₁/h₂" may be between 0.2 and 0.8, and the range of "hₚ+h₁-h₂" is preferably in the range of 100 and 200 nm, is more preferably in the range of 120 and 180 nm, and further more preferably in the range of 130 and 170 nm. When the "h₁/h₂" and "h₂/hₚ+h₁" are within the above ranges, the average thickness (hₚ) of the prepit and the average half width W measured in a radial direction of the prepit are preferably in the above-described ranges respectively.

In addition, as shown in Fig. 2B, the reflective layer 526 is preferably formed along the image recording layer 524. A ratio "t₁/t₂" between an average thickness t₁ of the reflective layer 526 on the prominence 600A of the prepit 600 and an average thickness t₂ of the reflective layer on the depression 600B of the prepit 600 is preferably in a range of 0.8 to 1.2, and more preferably in a range of 0.9 to 1.1.

In addition, the above thicknesses hₚ, h₁ and h₂ can be obtained using an AFM, a transmissive spectrometer, or an ellipsometer. Alternatively, they may be measured by observing a cross-section of the manufactured optical disc using an SEM. The measurement of the shape of the prepit may be conducted by using an AFM apparatus SPI3800N/SPA500 (trade name, manufactured by Seiko Instruments Inc.) and a plobe NCH-10V (rade name, manufactured by Veeco Instruments).

The substrate having the prepit may be manufactured using a stamper according to the invention. A prominence and depression suitable for forming the prepit is previously provided on the stamper according to the invention. An average height of the prominence of the prominence and depression is preferably in a range of 150 to 400 nm. It is possible to improve efficiency of the optical disc according to the invention by using the above stamper.

A process for fabricating the stamper may be similar to a process for fabricating a typical CD-ROM stamper. Specifically, a photoresist is formed on a glass disk and then developed. Subsequently, metal such as nickel can be sputtered and eletrocasted to fabricate the stamper.

The optical disc is preferably used in a system in which laser light is irradiated to substantially the same tracks in a plurality of times as described above or a system in which laser light is fluctuated in a radial direction of the optical disc and irradiated on substantially the same tracks in a plurality of times. Even when the optical recording medium is used in such a system, the apparatus of the invention can sufficiently recognize information on the optical disc. Therefore, it is possible to smoothly process a recording of visible information.

In addition, the optical disc having the specific prepit may be used in any kind of optical disc apparatus used in various laser wavelengths, such as a wavelength range of 700 to 800 nm for a CD application, a wavelength range of 600 to 700 nm for a DVD application, and a wavelength range of 380 to 450 nm for a Brue-Lay disc application and a HD DVD application. In theses apparatuses, it is possible appropriately detect signals from the optical disc due to the specific prepit. Among theses usages, the optical disc having the specific prepit according to the present invention is preferably used in an optical disc apparatus for a DVD application. Since the optical disc apparatus for a DVD application is operated with a laser having a wavelength of 600 to 700 nm, it may not be specifically suitable for detecting signals from the prepit. However, since signals can be sufficiently detected by adopting the specific prepit even if a laser wavelength range of 600 to 700 nm is utilized, recording of visible information can be appropriately conducted.

A configuration of an optical disc according to the invention is not particularly limited as long as the prepit is provided and the image recording layer is formed. In other words, a configuration of an optical disc according to the invention may be adopted in any one of a read-only type, a write-once type, and a rewritable type. Among them a write-once type optical disc is preferable. Also, the recording type is not particularly limited, and can be a phase change type, a magneto optical type, a dye type or the like. Among them, a dye type is preferable.

In addition, a layer structure of the optical disc may be configured as follows.
(1) A first layer structure is obtained by sequentially forming an information recording layer, a reflective layer, and an adhesive layer on a first substrate, and bonding a second substrate having an image recording layer onto the boding layer.
(2) A second layer structure is obtained by sequentially forming an information recording layer, a reflective layer, a protection layer, and an adhesive layer on a first substrate, and boding a second substrate having an image recording layer onto the adhesive layer.
(3) A third layer structure is obtained by sequentially forming an information recording layer, a reflective layer, a protection layer, and an adhesive layer on a first substrate, and bonding a second substrate having an image recording layer onto the protection layer.
(4) A fourth layer structure is obtained by sequentially forming an information recording layer, a reflective layer, a protection layer, an adhesive layer, a protection layer, and a reflective layer on a first substrate, and bonding a second substrate having an image recording layer onto the reflective layer.
(5) A fifth layer structure is obtained by sequentially forming an information recording layer, a reflective layer, an adhesive layer, and a reflective layer on a first substrate, and bonding a second substrate having an image recording layer on the reflective layer.
(6) A sixth layer structure is obtained by sequentially forming an information recording layer, a reflective layer, and a protection layer on a first substrate, sequentially forming an information recording layer, a reflective layer, and a protection layer on a second substrate, and adhering the protection layers of both laminations by interposing an adhesive layer therebetween.

The above layer structures (1) to (6) are shown for the purpose of exemplification, and the layer structures of the optical disc may be modified by exchanging some part of them as well as changing their sequence. In addition, a part of them (excluding the information recording layer and the image recording layer) may be omitted. Furthermore, each layer may be configured of a single layer or a plurality of layers.
Hereinafter, the substrate and each layer will be described. In addition, in the following description, the first and second substrates may be simply generally called "a substrate".

The layer configuration is preferably applied to a configuration of a DVD (including a DVD-R, a DVD-RW, and HD-DVD), namely, a bonding-type optical disc formed by bonding a first substrate and a second substrate, in which first substrate has provided with the information recording layer, the second substrate has provided with the image recording layer formed on a surface having the prepit.

Hereinafter, the layer structure shown in Fig. 1 will be described in detail for each layer.

### Information Recording Layer

The information recording layer is a layer on which information is recorded and reproduced by using recording laser light and reproducing laser light. Particularly, code information such as digital information is recorded. While either of a dye recording type recording layer or a phase change type recording layer may be used as the information recording layer, the dye recording type recording layer is more preferably used in the invention.

Examples of a dye included in the dye recording layer may include a cyanine dye, an oxonol dye, an azo dye, a phthalocyanine dye, a triazole compound (including a benzotriazole compound), a triazine compound, a merocianin compound, an aminobutadiene compound, a cinnamic acid compound, a benzo-oxazole compound, a pyrromethene compound, a squarylium compound, and the like. In addition, they may have a metal atom in its coordination center.
In addition, dyes disclosed in JP-A Nos. 4-74690, 8-127174, 11-53758, 11-334204, 11-334205, 11-334206, 11-334207, 2000-43423, 2000-108513, and 2000-158818 may be used.

If the optical information recording medium is a CD-R, a cyanine dye, an azo dye, and a phthalocyanine dye are preferable as the dye included in the dye recording layer. If the optical information recording medium is a DVD-R, a cyanine dye, an oxonol dye, an azo dye (e,g., a complex ofNi or Co), a pyrromethene compound may be preferable as the dye included in the dye recording layer. If the optical information recording medium is a blue ray disc or a HD-DVD, a cyanine dye, an oxonol dye, an azo dye, a phthalocyanine dye, a benzotriazole compound, and a triazine compound are preferable as the dye included in the dye recording layer.
In addition, if the optical information recording medium is a CD-R, a cyanine dye, an azo dye, and a phthalocyanine dye are more preferable as the dye included in the dye recording layer. If the optical information recording medium is a DVD-R, a cyanine dye, an oxonol dye, and an azo dye (e.g., a complex of Ni or Co) are more preferable as the dye included in the dye recording layer. If the optical information recording medium is a blue ray disc or an HD-DVD, a cyanine dye, an oxonol dye, an azo dye, and a phthalocyanine dye are more preferable as the dye included in the dye recording layer.

The information recording layer may be fabricated as follows. A recording material such as a dye is dissolved with an appropriate solvent together with a binder to provide a coating liquid. Then, the coating liquid is coated on the substrate to form a coated film, and then dried. A concentration of the recording material is typically in a range of 0.01 to 15 w/w%, preferably in a range of 0.1 to 10 w/w%, more preferably in a range of 0.5 to 5 w/w%, and most preferably in a range of 0.5 to 3 w/w%..

Examples of a method for forming the information recording layer include a deposition, a sputtering, a CVD, or a solvent spraying, and preferable examples thereof include a solvent spraying.

Examples of a solvent of the coating liquid may include: ester such as butyl acetate, ethyl lactate, and cellosolve acetate; ketone based materials such as methyl ethyl ketone, cyclohexanone, or methyl isobutyl ketone; chlorinated hydrocarbon such as dichloromethane, or 1,2-dichlororethane, chloroform; amide such as dimethylformamide; hydrocarbon such as methylcyclohexane; ethyl such as dibutylether, diethylether, tetrahydropuran, or dioxane; alcohol such as ethanol, n-propanol, isopropanol, n-buthanol, or diacetonealcohol; a fluoric solvent such as 2,2,3,3-tetrafluropropanol; and glycolether such as ethyleneglycolmonomethylether, ethyleneglycolmonoethylether, or propyleneglycolmonomethylether.

A single solvent can be used, or two or more kinds of the above solvents may be combined in consideration with solubility of a dye used in the solvent. In addition, various additives such as an anti-oxidant, a UV absorbing agent, a platicizer, or a lubricant may be added into the coating liquid.

Examples of the binder which may be used include natural organic polymers such as gelatin, cellulose derivatives, dextran, rosin, or rubber as well as synthetic inorganic polymers including: a hydrocarbonated resin such as polyethylene, polypropylene, polystyrene, or polyisobuthylene; a vinylic resin such as polyvinyl chloride, polyvinylidene chloride, or a copolymer of and a polyvinyl chloride and polyvinyl acetate; an acrylic resin such as polymethylacrylate or polymethylmetacrylate; and an initial condensate of a thermosetting resin such as polyvinylalcohol chlorinated polyethylene, an epoxy resin, a butyral resin, rubber derivatives, or a phenol-formaldehide resin.

When a binder is mixed in a material for the information recording layer, the mixed amount of the binder may be 0.01 to 50 times of an amount of the dye in mass, and is preferably 0.1 to 5 times of an amount of the dye in mass.

Examples of a method for applying the coating liquid may include a spray method, a spin coat method, a dipping method, a roll coat method, a blade coat method, a doctor roll method, a screen printing method, and the like. The information recording layer may be either of a single layer or a double layer. The thickness of the information recording layer is typically in a range of 10 to 500 nm, preferably in a range of 15 to 300 nm, and more preferably in a range of 20 to 150 nm.

The information recording layer may include various kinds of discoloring inhibitors in order to improve lightfastness of the information recording layer. A singlet oxygen quencher is typically used as the discoloring inhibitor. Publications such as patent documents known in the art may be used as the singlet oxygen quencher. Examples of publications disclosing the singlet oxygen quenchers may include: patent documents JP-A Nos. 58-175693, 59-31194, 60-18387, 60-19586, 60-19587, 60-35054, 60-36190, 60-36191, 60-44554, 60-44555, 60-44389, 60-44390, 60-54892, 60-47069, 68-209995, and 4-25492, Japanese Patent Application Publication (JP-B) Nos. 1-38680 and 6-26028, and German Patent No. 350399, and a publication of Japanese Chemical Forum, page 1141, October 1992.

The used amount of the discoloring inhibitor such as a singlet oxygen quencher may be in a range of 0.1 to 50 wt/wt%, preferably in a range of 0.5 to 45 wt/wt%, more preferably in a range of 3 to 40 wt/wt%, and most preferably in a range of 5 to 25 wt/wt% relative to an amount of the dye.

Examples of materials used in the phase change type information recording layer may include an Sb-Te alloy, a Ge-Sb-Te alloy, a Pd-Ge-Sb-Te alloy, an Nb-Ge-Sb-Te alloy, a Pd-Nb-Ge-Sb-Te alloy, a Pt-Ge-Sb-Te alloy, a Co-Ge-Sb-Te alloy, an In-Sb-Te alloy, an Ag-In-Sb-Te alloy, an Ag-V-In-Sb-Te alloy, and an Ag-Ge-In-Sb-Te alloy. The Ge-Sb-Te alloy and the Ag-In-Sb-Te alloy are preferably used because they are rewritable in multiple times. The thickness of the phase change type information recording layer may be preferably in a range of 10 to 50 nm, and more preferably in a range of 15 to 30 nm.

Examples of a method for forming the phase change type information recording layer include a sputtering method and a vapor film deposition method such as a vacuum deposition method.

### First and Second Substrates

The first and second substrates of an optical disc according to the invention may be fabricated by using various material used in a conventional optical disc substrate.

Examples of materials used in the substrate may include: glass, polycarbonate, an acrylic resin such as polymethylmetacrylate, a vinyl chloride resin such as polyvinyl chloride or vinyl chloride, an epoxy resin, amorphous polyolephin, polyester, and a combination of any of them as desired. These materials may be formed in the shape of a film or a rigid board. Polycarbonate is preferably used in the invention due to its resistance to humidity, dimensional stability, and cost.

The second substrate may be fabricated by forming the prepit on a side thereof where the image recording layer is formed using a stamper according to the invention. The height of the prominence corresponding to the depth of the prepit may be controlled by adjusting the film thickness of the photoresist.

The thickness of the first and second substrates is preferably in a range of 0.1 to 1.2 mm, preferably in a range of 0.2 to 1.1 mm, more preferably in a range of 0.5 to 1.1 mm, and most preferably in a range of 0.5 to 1.1 mm. If the thickness of the first and second substrate is in a range of 0.5 to 1.1 mm, it is possible to perform image drawing by using a laser mounted in a DVD-R drive, a DVD+R drive, a DVD recorderor the like. Preferably, the first substrate basically includes a groove or a tracking servo signal. The second substrate may also include groove or a tracking servo signal. A track pitch of the groove of the first substrate is preferably in a range of 280 to 450 nm, and more preferably in a range of 300 to 420 nm. In addition, the depth of the groove is preferably in a range of 15 to 150 nm, and more preferably in a range of 25 to 100 nm.

The groove for a tracking may be further formed on the second substrate in order to record a high definition image on the image recording layer. In this case, the track pitch of the groove is preferably in a range of 0.3 to 200 µm, more preferably in a range of 0.6 to 100 µm, and further preferably in a range of 0.7 to 50 µm from the viewpoint of the intensity distribution of the recording laser.

In addition, if the thickness of the substrate where a tracking is performed during an image is recorded and laser light is incident is 0.6 mm, the depth of the groove is preferably in a range of 50 to 250 nm, more preferably in a range of 80 to 200 nm, and further preferably in a range of 100 to 180 nm. The width of the groove is preferably in a range of 100 to 600 nm, more preferably in a range of 200 to 500 nm, and most preferably in a range of 250 to 450 nm. Furthermore, an optimal shape of the groove may be different depending on a wavelength of the laser light, a numerical aperture, the thickness of the substrate, or the like.

The surface of the first substrate (where the groove is formed) may include a primer layer in order to improve flatness and adhesion, and prevent deterioration of the information recording layer.
Examples of materials for the primer layer may include: polymers such as polymethylmetacrylate, a copolymer of acrylate and metacrylate, a copolymer of styrene and maleic anhydride, polyvinylalcohol, n-methylolacrylarnide, a copolymer of styrene and vinyltoluene, chlorosulfonated polyethylene, netrocellulose, polyvinyl chloride, chlorinated polyolefin, polyester, polyimide, a copolymer vinyl acetate and vinyl chloride, a copolymer of ethylene and vinyl acetate, polyethylene, polypropylene, or polycarbonate; and a surface modifier such as a silan coupling agent. The primer layer may be formed by dissolving or dispersing the above material into an appropriate solvent to obtain a coating liquid, applying the coating liquid onto the surface of the substrate using coating methods such as a spin coating, a dip coating, or an extrusion coating.
The thickness of the primer layer is typically in a range of 0.005 to 20 µm, preferably in a range of 0.01 to 10 µm.

On the other hand, in order to prevent reflected images cause by specular reflection light in the visible image drawn on the image recording layer, a surface roughening processing is preferably performed for the second substrate.

There may be various methods for the surface roughening process on the second substrate, and the invention is not particularly limited thereto. However, any of the following first to fifth surface roughening processes is preferably adopted.

(1) In a first surface roughening process, a surface where the image recording layer on the second substrate is to be formed is roughened using a stamper having a roughened surface which will make contact with a surface of the second substrate. Specifically, a roughening process is firstly performed for the stamper which will be used to form the second substrate. The above surface roughening process is performed using a blast method such as a sand blast until a desired roughness is obtained. In addition, a chemical process may be performed as will be described in the fifth surface roughening process. Subsequently, the stamper is installed in a die such that the roughened surface makes contact with a resin material of the second substrate, and a molding is performed through a method known in the art. As a result, the second surface has a roughened surface on only one side. Preferably, the desired roughness may be obtained by setting a maximum height Rz of the roughened surface to 0.3 to 5 µm and an average length RSm of a roughening curve element to 10 to 500 µm.

(2) In a second surface roughening process, a surface where the image recording layer on the second substrate is to be formed is roughened by using a molding die having a roughened surface which will make contact with the second substrate during the molding process. Specifically, a surface roughening is performed for a main surface of the molding die used to form the second substrate. Similarly to the first surface roughening process, a surface, a molding is performed for the second substrate using the above die through a method known in the art. As a result, the second surface has a roughened surface on only one side.

(3) In a third surface roughening process, a resin having fine particles diffused thereto is coated on a surface where the image recording layer is to be formed after the second substrate is fabricated, and then, the resin is cured. As a result, a surface where the image recording layer on the second substrate is to be formed is roughened. Examples of the above resin may include an acrylate based UV cured resin, or an epoxy based or isocyanate based resin.

In addition, the fine particles may be inorganic particles such as those of SiO₂ or Al₂O₃ or resin particles such as those of polycarbonate or acrylic. An average volume diameter of the fine particles may preferably be in a range of 0.3 to 200 µm, and more preferably in a range of 0.6 to 100 µm. It is possible to obtain a desired surface roughness by adjusting a diameter and a dosage of the fine particles.

(4) In a fourth surface roughening process, a mechanical machining is performed on a surface where the image recording layer is formed after the second substrate is fabricated, so that a surface where the image recording layer on the second substrate is to be formed is roughened. Although various processes can be performed for the mechanical machining, a blast process such as a sand blast is preferably applied.

(5) In the fifth surface roughening process, a chemical process is performed for a surface where the image recording layer is to be formed after the second substrate is fabricated, so that the a surface where the image recording layer on the second substrate is to be formed is roughened. The chemical process may be performed by coating or spraying a solvent on one surface of the second substrate after the molding and then performing an etching process. Examples of the solvent may preferably include an organic solvent such as dimethylformamide, or an acid solvent such as acetic acid, hydrochloric acid, and sulfuric acid. A desired roughness can be obtained by adjusting a specific concentration of the acid solvent or a coating time.

### First and Second Reflective Layers

The first and second reflective layers are provided in the vicinity of the image recording layer in order to improve reflectance during information is reproduced. A light reflective material used in the reflective layer has high reflectance for laser light, and examples of the light reflective material may include metal such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, or Bi, and semimetal or a stainless steel. A single material may be used, or a combination or an alloy of them including two or more materials may be used. Examples of material for the first and second reflective layers may preferably include Cr, Ni, Pt, Cu, Ag, Au, AI, and a stainless steel, more preferably, Au metal, Ag metal, Al metal, and an alloy of them, and most preferably, Ag metal, Al metal, and an alloy of them. The reflective layer can be formed on the substrate or the information recording layer by depositing, sputtering, or ion-plating the light reflective material. The thickness of the reflective layers is preferably in a range of 10 to 300 nm, and more preferably in a range of 50 to 200 nm.

### Adhesive layer

The adhesive layer is provided to bond the first lamination body 520 and the second lamination body 528 in Figs. 1A and 1B, and disposed between the first and second reflective layers 516 and 526. An adhesive used in the adhesive layer may include a UV curable resin as known in the art.

### Image Recording Layer

The optical disc according to the invention has an image recording layer opposite to the information recording layer as described above. Visible images (i.e., visible information) such as characters, figures, or patterns desired by users are recorded on the image recording layer. Examples of the visible images may include a disc title, information on contents, a thumbnail of contents, relating logos, designed clip arts, copyright information, a recording data and time, a recording method, a recording format, barcodes, and the like.

The visible image recorded on the image recording layer means an image that can be visually recognized, and examples of the visible image may include all visually recognizable images such as a character (string), a figure, a pattern, or the like. The characters may include various kinds of information such as an allowed persons list, expiration date information, a specified number of use, rental information, resolution selection information, layer selection information, user selection information, a copyright person, a copyright number, a manufacturer, a manufacturing date, a selling date, a bender, a bender shop, a use setup number, local setting information, language selection information, usage selection information, product user information, a password, or the like. -

The image recording layer is manufactured to allow image information such as characters, images, or patterns to be visibly recorded by irradiating laser light. The image recording layer preferably includes a dye compound in consideration with a clear pit. The dyes used in the information recording layer may be appropriately adopted as a material for the image recording layer. In this case, the image recording layer is preferably formed through a spin coat method using a coating liquid containing the dye compound.

In addition, in the optical disc according to the invention, while the aforementioned materials (such as dyes or phase change recording materials) of the information recording layer and the materials of the image recording layer may be similarly selected, it is preferable that the components are differently set because required characteristics are different between the image recording layer and the information recording layer. Specifically, it is preferable that the material for the information recording layer may be selected from those having an excellent recording/reproduction characteristic, and the material for the image recording layer may be selected from those that can increase a contrast of the recorded image. Particularly, a cyanine dye, a phthalocyanine dye, an azo dye, an azo metal complex, an oxonol dye are preferably used.

In addition, a leuco dye may be used. Specifically, crystal violet lactone, phtalide compounds such as 3,3-bis(1-ethyl2-ethylindol-3-yl)phtalide or 3-(4-diethyamino-2-etoxyphenyl)-3-(1-ethyl2-methylindol-3-yl)-4-azaphtalide; and fluoran compounds such as 3-cyclohexylmethylamino-6-methyl-7-anylinofluoran, 2-(2-chloroanylino)-6-dibuthylaminofluoran, 3-diethylamino-6-methyl-7-anylinofluoran, 3-dimythylamino-6-methyl-7-xylidinofluoran, 2-(2-chloroanylino)-6-diethylaminofluoran, 2-anylino-3-methyl-6(N-ethylisopentylamino)fluoran, 3-diethylamino-6-chloro-7-anylinofluoran, 3-benzylethylamino-6-methyl-7-anylinofluoran, or 3-methylpropylamino-6-methyl-7-anylinofluoran may be preferable.

The image recording layer may be formed by dissolving the above dye into a solvent to prepare a coating liquid and applying the coating liquid. The solvent similar to that of the information recording layer may be used. In addition, additives and a coating method are similar to those of the recording layer.

- The thickness of the image recording layer is preferably in a range of 0.01 to 200 µm, more preferably in a range of 0.05 to 100 µm, and most preferably in a range of 0.1 to 50 µm.

In a preferable embodiment, the image recording layer is a layer on which visible information is recorded by irradiating laser light onto approximately the same track in a plurality of times, and the recording of the visible information may be performed by irradiating laser light onto the prepit and detecting its returned light. In another preferable embodiment, the image recording layer is a layer on which the visible information is recorded by irradiating laser light fluctuating in a radial direction of the optical disc onto approximately the same track in a plurality of times, and the recording of the visible information is preferably performed by irradiating the laser light onto the prepit and detecting the returned light.
When the image recording layer of the optical disc of invention has a configuration of any of such embodiments, it is possible to have a drive or a recorder recognize that an image can be drawn onto the optical disc. The plurality of times of irradiation of the laser light enables improving contrast of a drawn image.

Hereinafter, a protection layer will be described.

### Protection Layer

A protection layer may be formed in the optical disc of the invention in order to physically and chemically protect the first reflective layer, the information recording layer, the second reflective layer, or the image recording layer.

Examples of a material for forming the protection layer include inorganic materials such as ZnS, ZnS-SiO₂ SiO, SiO₂, MgF₂, SnO₂, or Si₃N₄, or organic materials such as a thermoplastic resin, a thermosetting resin, or a UV curable resin.

In the case that the thermoplastic resin or the thermosetting resin is used as the material for forming the protection layer, the protection layer can be formed by dissolving the materials in an appropriate solvent to obtain a coating liquid, applying the coating liquid, and drying it. In the case that the UV curable resin is used as the material for forming the protection layer, the protection layer can be formed by applying the coating liquid, and curing it by irradiation of UV light. Various additives such as an antistatic agent, an antioxidant, or a UV absorbing agent may be added in the coating liquid according to the purpose. The thickness of the protection layer is typically in a range of 0.1 µm to 1 mm.

In addition, as described above, the optical disc according to the invention may be applied to a so called "read-only optical disc" having, on the first substrate, a recording portion (i.e., a prepit) where reproducible information is recorded by irradiating laser light.

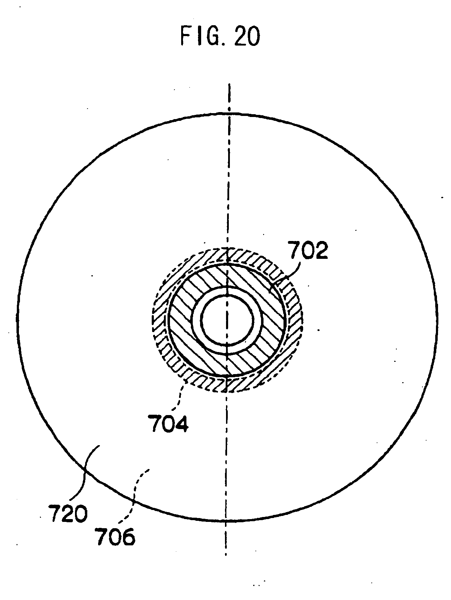

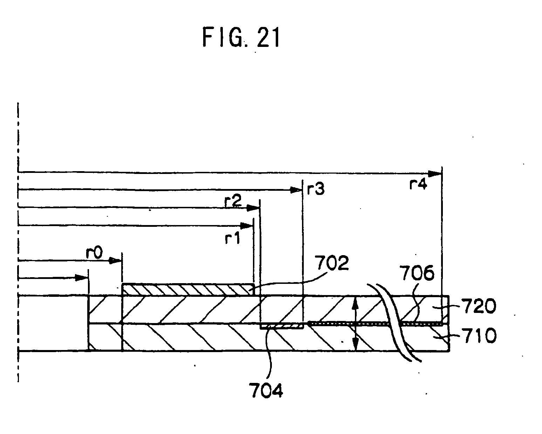

Particularly, variations of the optical disc according to the third aspect of the invention include one that shown in Figs. 20 and 21. Fig. 20 is a top plan view illustrating a configuration in which a print region 702 is formed on a label surface, and an information region 704 and an information recording region (i.e., an image recording layer) 706 are formed from the inner circumference in the inner portion of the disc (i.e., in the side of a forming surface of the label surface of the substrate 720). In addition, as shown in Fig. 21, its partial cross-section includes an image recording region 706 and an information region 704 from the outer circumference between the substrate 710 and the substrate 720. In addition, a print region 702 is formed on a surface of the substrate 720. For example, a product name or a manufacturer's name is printed on the print region. A screen printing may be used as the printing method. As shown in Fig. 20, the innermost end of the optical disc is shielded by forming the print region 702 in the innermost end so that a visual effect of a user can be improved.

The information region 704 is a region on which the prepit according to the invention is formed. On the image recording region 706, a visible image is drawn by the laser light as described above.

In this case, in Fig. 21, r0, that is the innermost end of the print region 702, is preferably is in a range of 8 to 21 mm, the outermost end r1 is preferably in a range of 21 to 23 mm (with the proviso of satisfying r0<r1). The innermost end r2 of the information region 704 is preferably in a range of 19 to 22 mm, and the outermost end r3 is preferably in a range of 22 to 25 mm (with the proviso of satisfying r2<r3). In addition, the innermost end r3 of the image recording region 706 is preferably in a range 22 to 25 mm, and the outermost end r4 corresponds to the outermost circumference of the image recording region (with the proviso of satisfying r3<r4).

The optical disc according to the invention may be adopted in a signal processing method, a signal processing apparatus, an image drawing method, and an optical disc recording apparatus as will be described below. Subsequently, an optical disc recording apparatus and an image drawing method according to the invention will be described, and a signal processing method and signal processing apparatus according to the invention will be described throughout this description.

### Optical disc recording apparatus

In the optical disc according to the invention, the image recording onto the image recording layer and the optical information recording onto the image recording layer are performed by using, for example, an optical disc drive (i.e., a recording apparatus) capable of recording information on both sides. As a result, even when one optical disc drive is used, a recording may be performed for one of the image recording layer and the information recording layer, and another recording may be also performed for another layer by turning over the disc.

The optical disc according to the invention may be suitably used for the following apparatuses and methods.

One example of the optical disc recording apparatus with which the optical disc according to the invention can be suitably used is an optical disc recording apparatus (1) which records information by irradiating laser light onto a recording surface (e.g., a dye recording layer) of an optical disc, the optical disc recording apparatus comprising: an optical pickup which irradiates laser light onto the optical disc; an irradiation position adjusting unit which adjusts a laser light irradiation position on the optical disc by the optical pickup; an image formation controlling unit which controls the optical pickup and the irradiation position adjusting unit such that a visible image corresponding to image information is formed on an image recording layer of the optical disc when the optical disc having the recording surface on one surface and the image recording layer on another surface is set in such a way that the image recording layer faces the optical pickup; and a spot beam controlling unit which controls the optical pickup such that a beam spot diameter of laser light irradiated by the optical pickup onto the image recording layer when the visible image is formed is larger than a beam spot diameter of laser light irradiated by the optical pickup onto the information recording layer when information is recorded.

When the optical disc recording apparatus has the configuration, the irradiation of laser light corresponding image data to the image recording layer of the optical disc causes change in the reflectance of the image recording layer according to the change in the optical absorbance of the image recording layer, so that a visible image corresponding to image data can be obtained. The laser beam can be irradiated onto a larger region during the optical disc being rotated in one cycle by increasing the beam spot diameter of the laser light irradiated onto the image recording layer of the optical disc when such a visible image is formed. Accordingly, it is possible to reduce the time for forming the visible image. In addition, the optical disc according to the invention can record an excellent visible image even by this method.

In addition, according to another embodiment of the invention, there is provided:
(2) An optical disc recording apparatus which records information by irradiating laser light onto a recording surface of an optical disc, the optical disc recording apparatus comprising: an optical pickup which irradiates laser light onto the optical disc; an irradiation position adjusting unit which adjusts a laser light irradiation position on the optical disc by the optical pickup; an image formation controlling unit which controls the optical pickup and the irradiation position adjusting unit such that a visible image corresponding to image information is formed on an image recording layer of the optical disc when the optical disc having an information recording layer on one surface and the image recording layer on another surface is set in such a way that the image recording layer faces the optical pickup, and the laser light irradiated onto the image recording layer by the optical pickup has either of a first intensity by which the image recording layer is hardly changed or a second intensity by which the image recording layer is changed to a greater extent than by the first intensity, according to the image information; and a servo unit which detects information on the laser light irradiated by the optical pickup onto the optical disc and controls the optical pickup to irradiate desired laser light based on a result of the detection, wherein the image formation controlling unit performs a control in such a way that the laser light irradiated from the optical pickup has the first intensity only for a predetermined time period, regardless of contents of the image information, when a time period for successively maintaining the intensity of the laser light irradiated by the optical pickup as the second intensity based on a control according to the image information exceeds a predetermined time period, and wherein the servo unit controls the optical pickup based on a result of the detection of the information on the laser light irradiated with the first intensity.

When the optical disc recording apparatus has the configuration, the irradiation of laser light corresponding image data to the image recording layer of the optical disc causes change in the reflectance of the image recording layer according to the change in the optical absorbance of the image recording layer, so that a visible image corresponding to image data can be obtained. Since laser light having the first intensity, by which the image recording layer is hardly changed to control the laser light when the visible image is formed, is irradiated regardless of the image data even when a time period of the second intensity, by which the intensity of the laser light corresponding to the image data changes the image recording layer, is maintained for a long time, it is possible to control the laser light according to the result of the irradiation. In addition, the optical disc according to the invention can favorably record the visible image even by this method.

According to another embodiment of the invention, there is provided:
(3) An optical disc recording apparatus which records information by irradiating laser light onto a recording surface of an optical disc, the optical disc recording apparatus comprising: an optical pickup which irradiates laser light onto the optical disc; an irradiation position adjusting unit which adjusts a laser light irradiation position on the optical disc by the optical pickup; an image formation controlling unit which controls the optical pickup and the irradiation position adjusting unit such that a visible image corresponding to image information is formed on an image recording layer of the optical disc when the optical disc having the recording surface on one surface and the image recording layer on another surface is set in such a way that the image recording layer faces the optical pickup; and a relative position adjusting unit which adjusts a relative positional relationship between the optical pickup and a surface facing the optical pickup in the optical disc according to whether the surface facing the optical pickup in the optical disc is the image recording layer or the information recording layer when the optical disc is set on the optical disc recording apparatus.

When the optical disc recording apparatus has the configuration, the irradiation of laser light corresponding image data to the image recording layer of the optical disc causes change in the reflectance of the image recording layer according to the change in the optical absorbance of the image recording layer, so that a visible image corresponding to image data can be obtained. In addition, a positional relationship between the optical pickup and the surface facing it can be adjusted based on whether the optical pickup faces the image recording layer or the recording surface when the optical disc is set. Therefore, it is possible to prevent the problem that various kinds of controls such as a focus control cannot be performed due to a distance difference between the optical pickup and the facing surface in respective cases that the image recording layer faces the optical pickup and the information recording layer faces the optical pickup. In addition, the optical disc according to the invention can favorably record the visible image even by this method.

According to another embodiment of the invention, there is provided:
(4) An optical disc recording apparatus which records information by irradiating laser light onto a recording surface of an optical disc, the optical disc recording apparatus comprising: an optical pickup which irradiates laser light onto the optical disc; an irradiation position adjusting unit which adjusts a laser light irradiation position on the optical disc by the optical pickup; a servo unit which controls the irradiation position controlling unit such that the laser light is irradiated along a guide groove based on light returned from the optical disc after the optical pickup irradiates the laser light, when the optical disc having the recording surface on one surface and the image recording layer on another surface, and having a guide groove formed in a spiral shape on the information recording surface, is set in such a way that the image recording layer faces the optical pickup; an image formation controlling unit which controls the laser light irradiated from the optical pickup such that a visible image corresponding to the image information is formed on the image recording layer of the optical disc during the time that the laser light irradiation position is moved along the guide groove by the servo unit. In addition, the optical disc according to the invention can favorably record the visible image even by this method.

When the optical disc recording apparatus has the configuration, the irradiation of laser light corresponding image data to the image recording layer of the optical disc causes change in the reflectance of the image recording layer according to the change in the optical absorbance of the image recording layer, so that a visible image corresponding to image data can be obtained. In this case, it is possible to form the visible image without performing a complicated work such as a laser light irradiation position control, in comparison with a case that the guide groove formed on the information recording layer is detected and the laser light irradiation position is moved along the guide grove in order to perform a recording for the recording surface.

According to another embodiment of the invention, there is provided:
(5) An optical disc recording apparatus which records information by irradiating laser light onto a recording surface of an optical disc, the optical disc recording apparatus comprising: an optical pickup which irradiates laser light onto the optical disc; a rotation driving unit which rotates the optical disc; a clock signal output unit which outputs a clock signal having a frequency corresponding to a rotation velocity of the optical disc rotated by the rotation driving unit; an image formation controlling unit which controls the laser light irradiated from the optical pickup according to the image information for each period of the clock signal from the signal output unit, the image formation controlling unit functioning as a means for controlling the optical pickup such that a visible image corresponding to the image information is formed on the image recording layer of the optical disc when the optical disc having an information recording layer on one surface and the image recording layer on another surface is set in such away that the image recording layer faces the optical pickup; a rotation detection unit which detects whether or not the optical disc has been rotated one rotation from a predetermined reference position by the rotation driving unit; and an irradiation position adjusting unit which adjusts the laser light irradiation position of the optical pickup to move a predetermined amount in a predetermined radial direction of the optical disc loaded in the optical disc recording apparatus when the rotation detection unit detects that the optical disc has been rotated one rotation from the predetermined reference position, in the state in which the laser light is irradiated from the optical pickup in order to form the visible image on the image recording layer of the optical disc.

When the optical disc recording apparatus has the configuration, the irradiation of laser light corresponding image data to the image recording layer of the optical disc causes change in the reflectance of the image recording layer according to the change in the optical absorbance of the image recording layer, so that a visible image corresponding to image data can be obtained. Since the laser light irradiation for forming the visible image is controlled for every period of the clock signal having a frequency corresponding to the rotation velocity of the optical disc when the visible image is formed, i.e., whenever the optical disc is rotated within a predetermined angle, it is possible to form the visible image corresponding to the contents (e.g., shading) of the image data in every position corresponding to a predetermined angle of the optical disc. In addition, the optical disc according to the invention can favorably record the visible image even by this method.

According to another embodiment of the invention, there is provided:
(6) An optical disc recording apparatus which records information by irradiating laser light onto a recording surface of an optical disc, the optical disc recording apparatus comprising: an optical pickup which irradiates laser light onto the optical disc; a rotation driving unit which rotates the optical disc; a rotation detection unit which detects whether or not the optical disc has been rotated one rotation from a predetermined reference position by the rotation driving unit; an image formation controlling unit which controls the optical pickup such that a visible image corresponding to the image information is formed on the image recording layer of the optical disc when the optical disc having the recording surface on one surface and the image recording layer on another surface is set in such a way that the image recording layer faces the optical pickup; and an irradiation position adjusting unit which adjusts the laser light irradiation position of the optical pickup to move a predetermined amount in a predetermined radial direction of the optical disc loaded in the optical disc recording apparatus when the rotation detection unit detects that the optical disc has rotated one rotation from the predetermined reference position, in the state in which the laser light is irradiated from the optical pickup in order to form the visible image on the image recording layer of the optical disc, wherein the image formation controlling unit controls the optical pickup such that the laser light for forming the visible image is not irradiated onto a region between the predetermined reference position and a forward position distant by a predetermined distance from the predetermined reference position that the laser light can reach, while the laser light is irradiated from the optical pickup in order to form the visible image from the predetermined reference position of the image recording layer of the optical disc rotated by the rotation driving unit.

When the optical disc recording apparatus has the configuration, the irradiation of laser light corresponding image data to the image recording layer of the optical disc causes change in the reflectance of the image recording layer according to the change in the optical absorbance of the image recording layer, so that a visible image corresponding to image data can be obtained. When the visible image is formed, the laser light is irradiated from the reference position of the optical disc while the optical disc is rotated to form the visible image. The laser light for forming the visible image is not irradiated onto a region just before the laser light irradiation position is returned to the reference position. Therefore, it is possible to prevent the laser light for forming the visible image from being irradiated onto an error position even when the laser light irradiation position control is detrimentally influenced for reasons such as unsafe rotation of the optical disc, so that the laser light is continuously irradiated from the reference position until the optical disc rotates one rotation and the irradiation position passes through the reference position again, i.e., the current laser light irradiation position is overlapped with the previous laser light irradiation position. As a result, it is possible to prevent deterioration of a finally formed visible image.

According to another embodiment of the invention, there is provided:
(7) An optical disc recording apparatus which records information by irradiating laser light onto a recording surface of an optical disc, the optical disc recording apparatus comprising: an optical pickup which irradiates laser light onto the optical disc; an irradiation position adjusting unit which controls a laser light irradiation position on the optical disc by the optical pickup; a disc identifying unit which obtains disc identification information for identifying a classification of the optical disc loaded in the optical disc recording apparatus; an image formation controlling unit which controls the optical pickup and the irradiation position adjusting unit depending on the classification of the optical disc identified by the disc identifying unit, the image formation controlling unit functioning as a means for controlling the optical pickup and the irradiation position adjusting unit such that a visible image corresponding to the image information is formed on the image recording layer of the optical disc when the optical disc having an information recording layer on one surface and the image recording layer on another surface is loaded in such a way that the image recording layer faces the optical pickup.

When the optical disc recording apparatus has the configuration, the irradiation of laser light corresponding image data to the image recording layer of the optical disc causes change in the reflectance of the image recording layer according to the change in the optical absorbance of the image recording layer, so that a visible image corresponding to image data can be obtained. It is possible to control formation of the visible image depending on the classification of the loaded disc when the visible image is formed.

According to another embodiment of the invention, there is provided:
(8) An optical disc recording apparatus comprising: an optical pickup which irradiates laser light onto an optical disc; a modulation unit which modulates information supplied from outside; and a laser light controlling unit which controls laser light irradiated from the optical pickup based on information supplied from the modulation unit, wherein the optical disc recording apparatus further comprises a prohibiting unit which prohibits modulation of the modulation unit for image information supplied from outside when a visible image is formed on the image recording layer of the optical disc having the recording surface on one surface and the image recording layer on another surface, and an image formation controlling unit which controls the laser light controlling unit such that a visible image corresponding to the image information, which is supplied from the modulation unit and is not modulated, is formed on the image recording layer of the optical disc when the image recording layer of the optical disc is set so as to face the optical pickup.

When the optical disc recording apparatus has the configuration, the irradiation of laser light corresponding image data to the image recording layer of the optical disc causes change in the reflectance of the image recording layer according to the change in the optical absorbance of the image recording layer, so that a visible image corresponding to image data can be obtained. Since the modulation unit, which modulates recording data when information is recorded on the recording surface, is prohibited from performing modulation when a visible image is formed, the image data is not modulated. Therefore, it is possible to simultaneously use a data transmission structure for recording information on the information recording layer without preparing a separate data transmission structure for forming the visible image according to the image data.

According to another embodiment of the invention, there is provided:
(9) An optical disc recording apparatus which records information by irradiating laser light onto a recording surface of an optical disc, the optical disc recording apparatus comprising: an optical pickup which irradiates laser light onto the optical disc; an irradiation position adjusting unit which adjusts a laser light irradiation position on the optical disc by the optical pickup; and an image formation controlling unit which controls the optical pickup and the irradiation position adjusting unit such that a visible image corresponding to the image information is formed on the image recording layer of the optical disc when the optical disc having the recording surface on one surface and the image recording layer on another surface is set in such a way that the image recording layer faces the optical pickup, wherein the image formation controlling unit controls the laser light irradiated from the optical pickup based on a gradation level represented in the image information.

When the optical disc recording apparatus has the configuration, the irradiation of laser light corresponding image data to the image recording layer of the optical disc causes change in the reflectance of the image recording layer according to the change in the optical absorbance of the image recording layer, so that a visible image corresponding to image data can be obtained. When such a visible image is formed, the laser light can be controlled according to the gradation level at each position (in a coordinate system) on the image recording layer, represented by the image data. Therefore, it is possible to form a visible image having a gradation representation.

According to another embodiment of the invention, there is provided:
(10) An optical disc recording apparatus which records information by irradiating laser light onto a recording surface of an optical disc, the optical disc recording apparatus comprising: a rotation unit which rotates an optical disc; an optical pickup which irradiates laser light onto the optical disc rotated by the rotation unit from one side surface and that can move in an optical disc radial direction; a laser light level controlling unit which, based on image data corresponding to the visible image to be formed, adjusts a laser light level output from the optical pickup when the visible image is formed on the image recording layer in such a way that the laser light level has any one of first and second intensities, where the information recording layer and the image recording layer of the optical disc are hardly changed with the first intensity, and a color representation of the image recording layer is changed with the second intensity.

When the optical disc recording apparatus has the configuration, it is possible to record information on the information recording layer as well as form a visible image on the image recording layer of the optical disc according to the invention. In addition, since both of the information recording and the formation of the visible image can be performed by irradiating laser light from the same surface of the optical disc, a user is not required to perform cumbersome operations such as turning over the optical disc or resetting it.

Specifically, according to one embodiment of a third aspect of the invention, there is provided:
(11) An optical disc recording apparatus which records information by irradiating laser light onto a recording surface of an optical disc, the optical disc recording apparatus comprising: an optical pickup which irradiates laser light onto the optical disc; an irradiation position adjusting unit which adjusts a laser light irradiation position on the optical disc by the optical pickup; an image formation controlling unit which controls the optical pickup and the irradiation position adjusting unit such that a visible image corresponding to image information is formed on the recording surface of the optical disc, and the laser light irradiated onto the image recording layer by the optical pickup has any one of a first intensity, by which the image recording layer is hardly changed, or a second intensity, by which the image recording layer is changed to a greater extent than by the first intensity, according to the image information; and a servo unit which detects information on the laser light irradiated by the optical pickup onto the optical disc and controls the optical pickup to irradiate desired laser light based on a result of the detection, wherein the image formation controlling unit performs a control in such a way that the laser light irradiated from the optical pickup has a first intensity for a predetermined time period regardless of the contents of the image information when a time period for successively maintaining the intensity of the laser light irradiated by the optical pickup as the second intensity based on a control according to the image information exceeds a predetermined time period, and wherein the servo unit controls the optical pickup based on a result of the detection of the information on the laser light irradiated with a first intensity.

When the optical disc recording apparatus has the configuration, the irradiation of laser light corresponding image data to the image recording layer of the optical disc causes change in the reflectance of the image recording layer according to the change in the optical absorbance of the image recording layer, so that a visible image corresponding to image data can be obtained. Since, when the visible image is formed, the laser light is controlled such that laser light having the first intensity, by which the image recording layer is hardly changed, is irradiated regardless of the image data even when a time period of the second intensity, by which the intensity of the laser light corresponding to the image data changes the recording surface, is maintained for a long time, it is possible to control the laser light according to the result of the irradiation. In addition, the optical disc according to the invention can favorably record the visible image even by this method.

The invention provides a method of forming an visible image on an image recording layer, which is formed on an opposite surface to the recording surface of the optical disc, using an optical disc recording apparatus having an optical pickup for irradiating laser light onto an information recording layer of the optical disc to record information, wherein the laser light irradiated from the optical pickup is controlled such that the visible image corresponding to image information is formed on the image recording layer of the optical disc while the laser light irradiation position of the optical pickup is moved along a path having a predetermined spiral shape or concentric circle shape on the image recording layer, wherein the optical disc is divided into a plurality of fan-shaped portions, a predetermined number of neighboring portions including the path are combined into a unit region, and the laser light irradiation timing for irradiating each path included in the unit region is controlled such that a shading of the unit region of the visible image can be represented.

In the method having the configuration, the irradiation of laser light corresponding image data to the image recording layer of the optical disc causes change in the reflectance of the image recording layer according to the change in the optical absorbance of the image recording layer, so that a visible image corresponding to image data can be obtained. Since the laser light irradiation timing can be controlled according to the gradation level at each position of the image recording layer, indicated in the image data when such a visible image is formed, it is possible to obtain a visible image having a gradation representation.

### Detailed Configuration of Optical disc recording apparatus

An optical disc recording apparatus records information by irradiating laser light onto a recording surface of the optical disc. The optical disc has the recording surface on one surface and an image recording layer on the other surface, and has a function of forming a visible image corresponding to image data by irradiating the laser light onto the image recording layer of the optical disc. In addition, this apparatus can record a visible image on a recording layer for recording typical digital data as well as an image recording layer of the optical disc, using a predetermined dye.

### Configuration of Optical disc recording apparatus

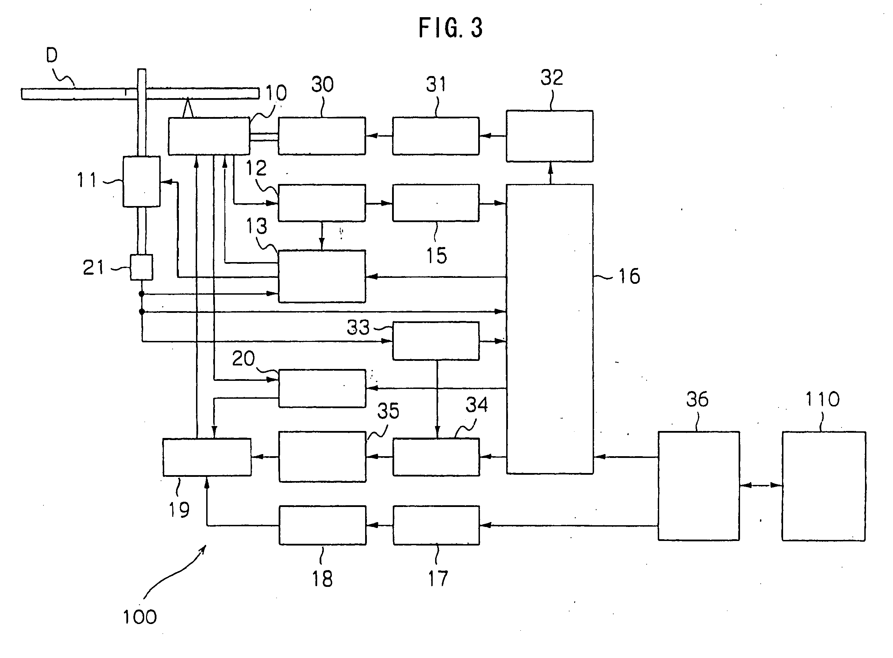

Fig. 3 is a block diagram illustrating a structure of an optical disc recording apparatus. As shown in Fig. 3, the optical disc recording apparatus 100 is connected to a host personal computer (PC) 110, and includes an optical pickup 10, a spindle motor (i.e., a rotation driving unit) 11, a radio frequency (RF) amp 12, a servo circuit 13, a decoder 15, a controller 16, an encoder 17, a strategy circuit 18, a laser driver 19, a laser power control circuit 20, a frequency generator 21, a stepping motor 30, a motor driver 31, a motor controller 32, a phase locked loop (PLL) circuit 33, a first-in-first-out (FIFO) memory 34, a driving pulse generator 35, and a buffer memory 36.

The spindle motor 11 is a motor for rotating the optical disc D corresponding to a data recording object, and its rotation frequency is controlled by the servo circuit 13. In the optical disc recording apparatus 100 according to the present embodiment, since the recording is performed using a constant angular velocity (CAV) method, the spindle motor 11 is set to rotate at a constant angular velocity set by an instruction from the controller 16.

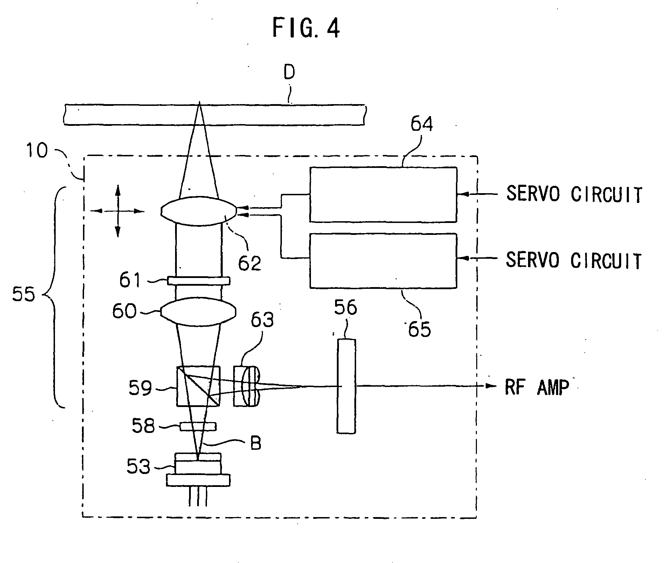

The optical pickup 10 is a unit for irradiating laser light onto an optical disc D rotated by the spindle motor 11, and its structure is shown in Fig. 4. As shown in Fig. 4, the optical pickup includes a laser diode 53 for outputting a laser beam B, a diffraction grating 58, an optical system 55 for concentrating the laser beam B onto the surface of the optical disc D, and an photo-receiving device 56 for receiving reflected light.

In the optical pickup 10, the laser diode 53 outputs a laser beam B having an intensity corresponding to a driving current supplied from the laser driver 19 (refer to Fig. 3). The optical pickup 10 divides the laser beam B output from the laser diode 53 into a main beam, a preceded beam, and a followed beam using a diffraction grating 58, and concentrates these three beams at a surface of the optical disc D via a polarization beam splitter 59, a collimator lens 60, a 1/4 wavelength plate 61, and an objective lens 62. Then, the three laser beams reflected on the surface of the optical disc D are transmitted again through the objective lens 62, the 1/4 wavelength plate 61, and the collimator lens 60, and reflected on the polarization beam splitter 59, so as to be incident into the photo-receiving device 56 via a cylindrical lens 63. The photo-receiving device 56 outputs the received signal to the RF amp 12 (refer to Fig. 3), and the received signal is supplied to the controller 16 or the servo circuit 13 via the RF amp 12.

The objective lens 62 is supported by a focus actuator 64 and a tracking actuator 65, so as to be moved along a radial direction of the optical disc D or an optical axis direction of the laser beam B. The focus actuator 64 and the tracking actuator 65 move the objective lens 62 in an optical axis direction and a radial direction according to a focus error signal and a tracking error signal, respectively, supplied from the servo circuit 13 (refer to Fig. 3). In addition, the servo circuit 13 generates the focus error signal and the tracking error signal based on the received optical signal supplied through the photo-receiving device 56 and the RF amp 12, and performs a focus control and a tracking control by moving the objective lens 62 as described above.

In addition, the optical pickup 10 has a front monitor diode (not shown in the drawing), from which a current is generated when the laser light output from the laser diode 53 is received, so that the current is supplied from the optical pickup 10 to a laser power control circuit 20 shown in Fig. 3.

The RF amp 12 amplifies an eight-to-fourteen-modulated (EFM) RF signal supplied from the optical pickup 10, and outputs the amplified RF signal to the servo circuit 13 and the decoder 15. The decoder 15 EFM demodulates the EFM modulated RF signal supplied from the RF amp 12 to generate reproduction data when the reproduction is performed.

The servo circuit 13 receives an instruction signal from the controller 16, an FG pulse signal having a frequency that corresponds to the rotation number of the spindle motor 11 and is supplied from the frequency generator 21, and an RF signal from the RF amp 12. The servo circuit 13 performs a focus control and a tracking control for the optical pickup 10 and a rotation control for the spindle motor 11 based on these supplied signals. A method of driving the spindle motor 11 when information is recorded on the recording surface (refer to Fig. 1) of the optical disc D or when a visible image is formed on the image recording layer (refer to Fig. 1) of the optical disc D may be a constant angular velocity (CAV) type in which the optical disc D is rotated at a constant angular velocity, or a constant linear velocity (CLV) type in which the optical disc D is rotated at a constant recording linear velocity. The optical disc recording apparatus 100 described in Fig. 1 and thereafter adopts the CAV type, and the servo circuit 13 drives the spindle motor 11 at a constant angular velocity instructed by the controller 16.

The buffer memory 36 accumulates the information to be recorded on the recording surface of the optical disc D (hereinafter, referred to as recording data), and information corresponding to the visible image to be formed on the image recording layer of the optical disc D (hereinafter, referred to as image data), as supplied from the host PC 110. The recording data accumulated in the buffer memory 37 are output to the encoder 17, and the image data are output to the controller 16.

The encoder 17 modulates the recording data supplied from the buffer memory 36 using an EFM method, and outputs them to the strategy circuit 18. The strategy circuit 18 performs a temporal axis correction processing for the EFM signal supplied from the encoder 17, and outputs the result to the laser driver 19.

The laser driver 19 drives the laser diode 53 (refer to Fig. 4) of the optical pickup 10 based on the modulated signal corresponding to the recording data supplied from the strategy circuit 18 and a control from the laser power control circuit 20.

The laser power control circuit 20 controls the laser power irradiated from the laser diode 53 (refer to Fig. 4) of the optical pickup 10. Specifically, the laser power control circuit 20 controls the laser driver 19 such that laser light having optimal laser power as instructed by the controller 16 can be irradiated from the optical pickup 10. The laser power control performed by the laser power control circuit 20 is a feedback control using a current value supplied from the front monitor diode of the optical pickup 10, by which laser light having a desired intensity can be irradiated from the optical pickup 10.

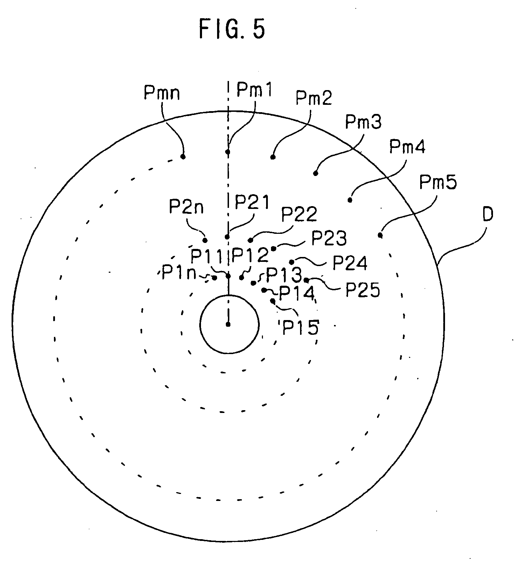

The image data supplied from the host PC 110 and accumulated in the buffer memory 36 are supplied through the controller 16 and sequentially stored in the FIFO memory 34. In this case, the image data stored in the FIFO memory 34, i.e., the image data supplied from the host PC 110 to the optical disc recording apparatus 100, includes the following information. These image data are data for forming a visible image on the surface of the optical disc D having a disk shape. As shown in Fig. 5, information on gradation levels (i.e., shadings) are described for each of n coordinate points (shown as black points in the drawing) on a plurality of concentric circles with respect to a center of the optical disc D. The image data includes information representing gradation levels of every coordinate point, such as coordinate points P11, P12... P1n included in the innermost circle, coordinate points P21, P22...P2n included in the next adjacent outer circle, coordinate points included in the next adjacent outer circle, and so on, and coordinate points Pmn included in the outermost circle in an outer circumferential order. The information representing gradation levels of each polar coordinate point are supplied to the FIFO memory 34 in the aforementioned order. In addition, Fig. 5 schematically illustrates a positional relationship between certain coordinate points, and actual coordinate points are more densely disposed in comparison with Fig. 5. Furthermore, when the image data for the image to be formed on the photosensitive surface of the optical disc D are prepared using a typical method such as a bitmap format, corresponding bitmap data are transformed into the polar coordinate format, and the transformed image data may be transmitted from the host PC 110 to the optical disc recording apparatus 100.

When the visible image is formed on the image recording layer of the optical disc D based on the image data supplied as described above, an image recording clock signal is supplied from the PLL circuit 33 to the FIFO memory 34. The FIFO memory 34 outputs information representing a gradation level of a coordinate point that was accumulated first to the driving pulse generator 35 whenever the clock pulse of the image recording clock signal is supplied.

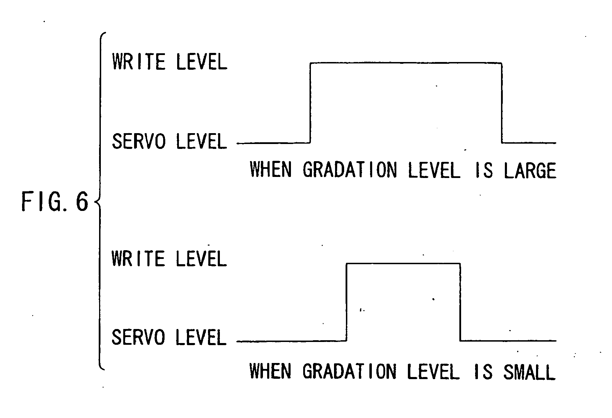

The driving pulse generator 35 generates a driving pulse for controlling an irradiation timing of the laser light irradiated from the optical pickup 10. In this case, the driving pulse generator 35 generates a driving pulse having a pulse width corresponding to information representing a gradation level for each coordinate point supplied from the FIFO memory 34. For example, when a gradation level of a certain coordinate point is relatively large (its shading is high), a driving pulse having a large pulse width in a write level (i.e., a second intensity) is generated, as shown at the top of Fig. 6. On the contrary, for a coordinate point having a relatively small gradation level, a driving pulse having a small pulse width in the write level is generated as shown at the bottom of Fig. 6. In this case, the write level is a power level at which the reflectance of the image recording layer is obviously changed when the laser light having this power level is irradiated onto the image recording layer of the optical disc. When the driving pulse is supplied to the laser driver 19, laser light having a write level is irradiated from the optical pickup 10 during a time period corresponding to the pulse width. Accordingly, the laser light having the write level is irradiated for a longer time if the gradation level is larger, so that the reflectance of a larger region of the unit region in the image recording layer of the optical disc D is changed. As a result, a user visually recognizes this region as a region having a denser concentration. In the present embodiment, the gradation level represented by the image data is expressed by varying a length (i.e., a unit length) of the region capable of changing the reflectance in the vicinity of the unit region. In addition, the servo level (i.e., the first intensity) is a power level at which the image recording layer is hardly changed when laser light having this power level is irradiated onto the image recording layer of the optical disc. For a region where the reflectance is not required to be changed, laser light having the write level is not irradiated, but the laser light having the servo level is irradiated.

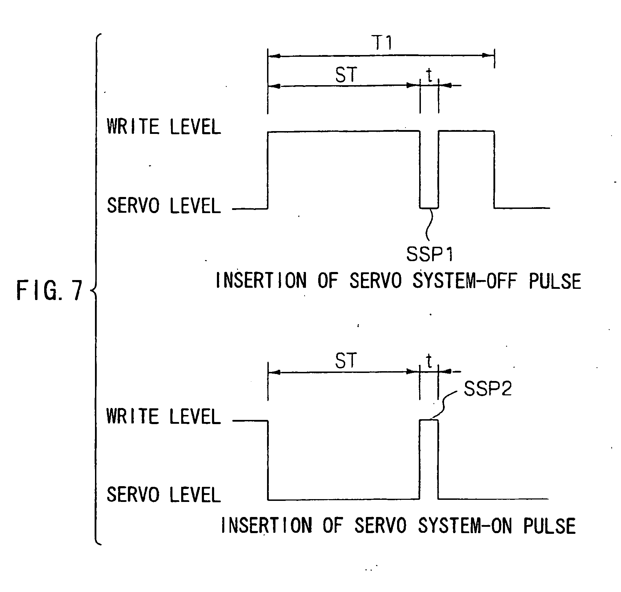

The driving pulse generator 35 generates the driving pulse according to information representing gradation levels of every coordinate and inserts the pulse of the write level having a very short period or the pulse of the servo level regardless of the information representing the gradation level when a laser power control using the laser power control circuit 20 and a focus control and tracking control using the servo circuit 13 are required to be performed. For example, as shown at the top of Fig. 7, when the laser light of the write level needs to be irradiated during the time T1 so as to display the visible image according to the gradation level of any coordinate in the image data and the time T1 is longer than a predetermined servo period ST for controlling the laser power, a servo system-off pulse SSP1 having a very short time period t is inserted after a lapse of the servo period ST from a point of time when the pulse of the write level is generated. Meanwhile, as shown at the bottom of Fig. 7, when the laser light of the servo level needs to be irradiated during at least the servo period ST so as to display the visible image according to the gradation level of any coordinate point in the image data, the pulse of the servo level is generated and a servo system-on pulse SSP2 is inserted after a lapse of the servo period ST.

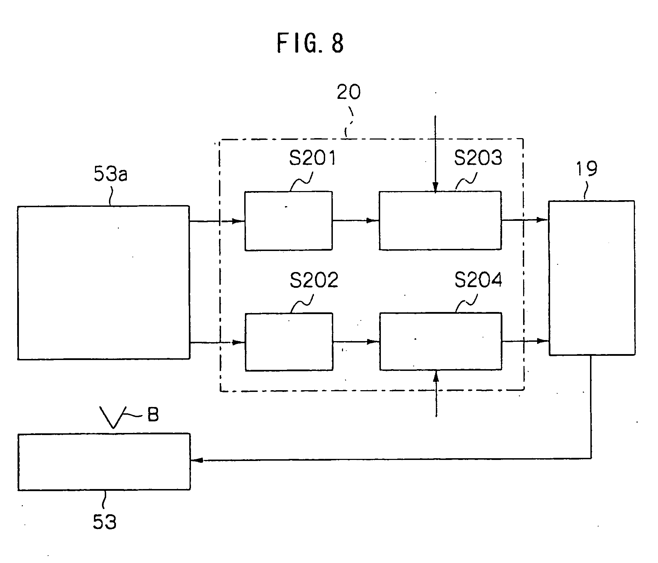

As described above, the laser power control using the laser power control circuit 20 is performed based on the current (i.e., a current value corresponding to the intensity of the irradiated laser light) supplied from a front monitor diode which receives the laser light irradiated from the laser diode 53 (see Fig. 4) of the optical pickup 10. More specifically, as shown in Fig. 8, the laser power control circuit 20 samples and holds the value corresponding to the intensity of the irradiated laser light received by the front monitor diode 53a (S201 and S202). When the laser light is irradiated to reach the write level as a target value, that is, when the driving pulse of the write level (see Fig. 6 and Fig. 7) is generated, the laser power control is performed based on the sampling and holding result such that the laser light is irradiated to reach the write level supplied from the controller 16 as the target value (S204). Accordingly, when the pulse of the write level or the servo level is not output during a time longer than the predetermined servo period ST (sample period), the servo system-off pulse SSP1 and the servo system-on pulse SSP2 are forcedly inserted regardless of the contents of the image data as described above and the laser power control is allowed to be performed for each of the above-described levels.

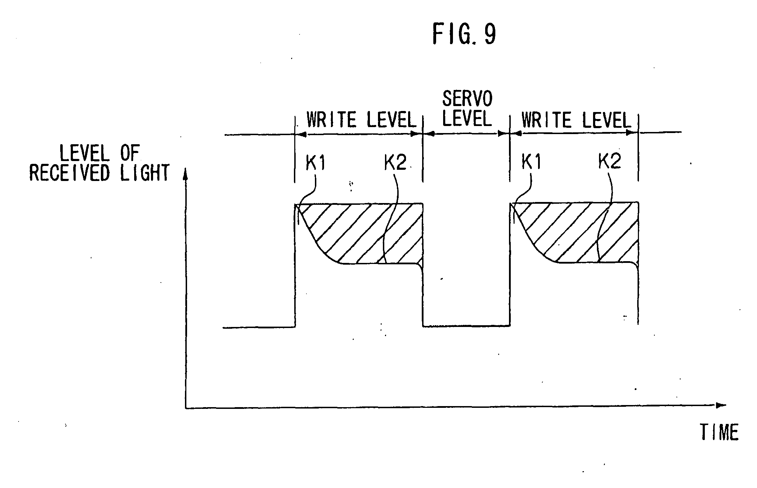

The servo system-off pulse SSP1 is inserted so as to perform the focus control or the tracking control using the servo circuit 13 as well as the laser power control. That is, the tracking control and the focus control are performed based on the RF signal received by the photo-receiving device 56 (see Fig. 4) of the optical pickup 10, that is, the returned light (reflected light) from the optical disc D of the laser light emitted from the laser diode 53. In Fig. 9, an example of the signal received by the photo-receiving device 56 when the laser light is irradiated is shown. As shown in Fig. 9, the reflected light when the laser light of the write level is irradiated includes a peak portion K1 in which the level of the laser light rises and a shoulder portion K2 in which the level of the laser light is constant. The oblique line of the drawing can be understood as the energy used in forming the image of the image recording layer. The energy used in forming the image of the image recording layer cannot always have a stable value and varies depending on various circumstances. Accordingly, the shape of the oblique line of the drawing varies over time. That is, since the reflected light of the laser light of the write level includes much noise, a stable reflected light cannot be obtained. Accordingly, when the reflected light is used, the focus control and the tracking control may not be accurately performed. Thus, when the laser light of the write level is irradiated for a long time, the reflected light of the laser light of the servo level cannot be obtained and thus the focus control and the tracking control cannot be accurately performed.

Accordingly, by inserting the servo system-off pulse SSP1, the reflected light of the laser light of the servo level can be periodically obtained and thus the focus control and the tracking control can be performed based on the obtained reflected light. When the visible image is formed on the image recording layer of the optical disc D, the previously formed pregroove (guide groove) need not be traced unlike when recording the image on the recording surface. Accordingly, in the present embodiment, the target value of the tracking control is a fixed value (a constant offset voltage is set). This controlling method can apply to the case where the image information is formed on the image recording layer and also to the case where the image information is formed on the recording surface. That is, in the case where a material of which the reflectance and coloring vary is used in the recording surface (recording layer) when the laser light is irradiated, it is possible to form the image on the recording surface. When the visible image is formed on the recording surface, original data cannot be recorded on the portion on which the visible image is formed. Thus, it is preferable that a region for recording the data and a region for forming the visible image are divided in advance.

As described above, it is preferable that the time for inserting the servo system-off pulse SSP 1 or the servo system-off pulse SSP2 is set to a minimum value within a range that the servo controls such as the laser power control, the tracking control or the focus control are not interrupted. By decreasing the insertion time, it is possible to perform various servo controls without substantially affecting formation of the visible image.

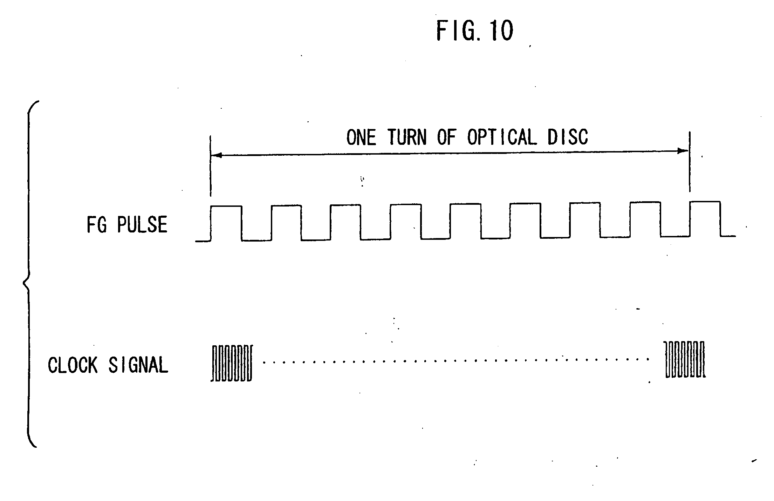

Returning to Fig. 3, the PLL circuit (signal output unit) 33 multiplies the FG pulse signal having a frequency that corresponds to the rotation velocity of the spindle motor 11 and that is supplied from the frequency generator 21 to output a clock signal that can be used in formation of the visible image, which will be described below. The frequency generator 21 outputs the FG pulse signal having a frequency corresponding to the spindle rotation number using a counter electromotive current obtained by the motor driver of the spindle motor 11. For example, as shown at the top of Fig. 10, the frequency generator 21 generates eight FG pulses when the spindle motor rotates once, that is, when the optical disc D rotates once and, as shown at the bottom of Fig. 10, the PLL circuit 33 outputs the clock signal (for example, the frequency five times that of the FG pulse signal or 40 pulses of the H level when the optical disc D rotates once) obtained by multiplying the FG pulse, that is, the clock signal having the frequency corresponding to the rotation velocity of the optical disc D rotated by the spindle motor 11. The clock signal obtained by multiplying the FG pulse signal is output from the PLL circuit 33 to the FIFO memory 34, and the data representing the gradation level of one coordinate is output from the FIFO memory 34 to the driving pulse generator 35 in every period, that is, whenever the disc D rotates by a certain angle. Although the clock signal obtained by multiplying the FG pulse is generated using the PLL circuit 33 as described above, the clock signal obtained by multiplying the FG pulse, that is, the clock signal having the frequency corresponding to the rotation velocity of the optical disc D, may be generated by providing a crystal oscillator instead of the PLL circuit 33 when a motor having a sufficiently stable rotation capability is used as the spindle motor 11.

A stepping motor 30 moves the optical pickup 10 in a diametric direction of the optical disc D. A motor driver 31 rotates and drives the stepping motor 30 according to the amount of pulse signal supplied from a motor controller 32. The motor controller 32 generates a pulse signal corresponding to the movement amount or the movement direction according to a movement start instruction, including the movement direction and the movement amount of the optical pickup 10 in the diametric direction, supplied from the controller 16 and outputs the pulse signal to the motor driver 31. When the stepping motor 30 moves the optical pickup 10 in the diametric direction of the optical disc D, and the spindle motor 11 rotates the optical disc D, it is possible to move the laser light irradiating position of the optical pickup 10 to various positions of the optical disc D. Accordingly, these components constitute the irradiation position adjusting unit.

The controller 16 includes a central processing unit (CPU), a read only memory (ROM) and a random access memory (RAM). Each unit of the optical disc recording apparatus 100 is controlled based on a program stored in the ROM, so as to mainly control the recording process on the recording surface of the optical disc D and the image formation process on the image recording layer of the optical disc D

The configuration of the optical disc recording apparatus 100 according to the present embodiment is as described above.

Particularly, the optical disc recording apparatus of the first aspect of the invention includes: (1) a unit for recognizing the prepit or the pregroove and obtaining the information regarding the position of the image drawing prohibited region; and (2) a controlling unit for preventing an image from being drawn in the image drawing prohibited region, and the optical disc recording apparatus obtains the information regarding the position of the image drawing prohibited region recorded in the prepit (or the pregroove) and draws the controlled image such that a drawing of the image is not performed in the image drawing prohibited region based on the information.

The the image drawing method of the first aspect of the invention includes processes corresponding the to above-described units by including (a) recognizing information regarding the position of an image drawing prohibited region recorded in a prepit or a pregroove, and (b) performing a control such that the image is not drawn in the recognized image drawing prohibited region.

In the unit (1), the laser light is irradiated onto the prepit region of the image recording layer of the optical disc D rotated by the spindle motor 11, the obtained returned light is detected and the prepit signal is read. This unit is similar to the signal processing unit and is applicable to a unit for recording the prepit signal as known in the art. The read prepit signal is input to the decoder and decoded by the decoder to obtain the prepit information (information regarding the position).

In the unit (2), the control is performed according to the information regarding the position of the image drawing prohibited region read by the unit of (1) such that the image is not drawn in the image drawing prohibited region. For example, the information regarding the position of the image drawing prohibited region is stored in the ROM of the controller and the controller reads the information regarding the position corresponding to the detected prepit signal from the ROM and draws an image such that the image is not drawn in the image drawing prohibited region.

When at least a portion of the image recording layer is formed on the region on which the prepit is formed in the optical disc according to the third aspect of the invention, and, when in the optical disc is that of the second aspect of the invention, the optical disc recording apparatus has the following unit, obtains the information on the image drawing recorded in the prepit region and draws the image in accordance with the information. That is, the optical disc recording apparatus has:
(1) a unit for irradiating the laser light onto the prepit region and reading the prepit signal;
(2) a unit for reversing the polarity of the prepit signal;
(3) a unit for decoding the reversed prepit signal and obtaining the prepit information; and
(4) a unit for drawing the image in accordance with the prepit information.

The image drawing method according to the second and third aspects of the invention includes the following (a) to (d) corresponding to the units (1) to (4):
(a) irradiating the laser light onto the prepit region and reading the prepit signal,
(b) reversing the polarity of the prepit signal,
(c) decoding the reversed prepit signal and obtaining the prepit information, and
(d) drawing the image in accordance with the prepit information.

The unit (1) irradiates the laser light onto the prepit region of the optical disc D rotated by the spindle motor 11 by the optical pickup 10, detects the obtained returned light, and reads the prepit signal. This unit is the same as the above-described signal processing unit and is applicable to the known unit for reading the prepit signal.

The unit (2) reverses the polarity of the prepit signal obtained by the unit (1). As described above, in the optical disc according to the invention, since the image recording layer exists on the upper layer of the prepit region, the polarity of the prepit signal is opposite to that when the image recording layer is not provided on the upper layer of the prepit region. Although the prepit signal of which the polarity is not reversed is input to the existing decoder, the controller cannot generate the readable prepit information. Accordingly, the polarity of the signal is reversed to be converted into a signal which will be obtained when the image recording layer does not exist and the converted signal is supplied to the decoder. That is, in the prepit signal, a positive portion is converted into a negative portion and a negative portion is converted into a positive portion such that the signal waveform is symmetrical in the positive and negative directions. Before or after the polarity of the prepit signal is reversed by the unit (2), the signal may be equalized.

Any unit for reversing the polarity can be used as the polarity reversing unit as long as it reverses the polarity of the signal input in accordance with the instruction of the controller, and the polarity may be reversed by a known polarity reverser.

In the unit (3), the prepit signal having the reversed polarity is input to the decoder and decoded by the decoder to obtain the prepit information. The signal having the reversed polarity is the originally read signal when the image recording layer does not exist as described above and is decoded by the decoder to obtain the prepit information.

In the unit (4), the image is drawn by the prepit information such as the image drawing condition which is previously recorded. For example, the image drawing condition corresponding to the prepit information is previously prepared in a table and stored in the ROM of the controller and the controller reads the image drawing condition corresponding to the detected prepit information using the table and draws the image according to the read image drawing condition, thereby drawing the image according to the optimal image drawing condition.

### Operation of Optical disc recording apparatus

Next, the operation of the optical disc recording apparatus 100 having the aforementioned structure will be described. The optical disc recording apparatus 100 can record information such as music and data supplied from a host PC 110 onto the recording surface of the optical disc D and form a visible image corresponding to the image data supplied from the host PC 110 on the image recording layer of the optical disc D.

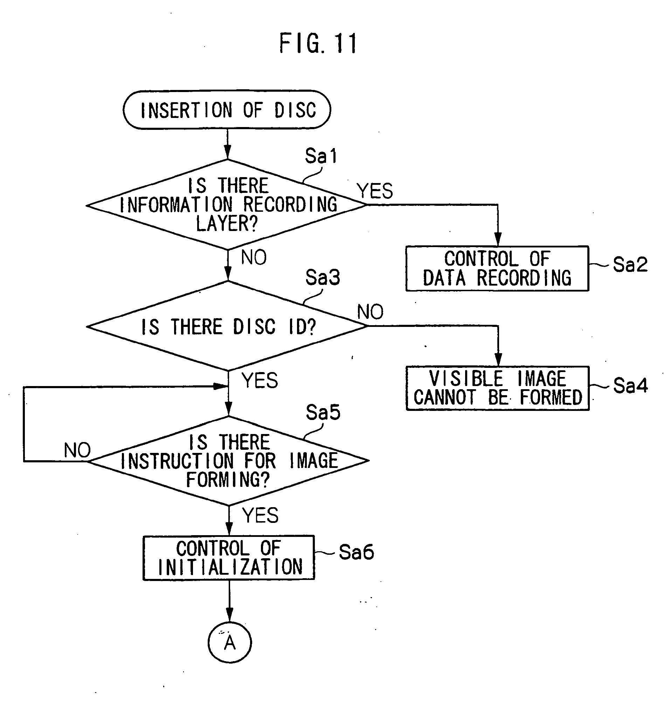

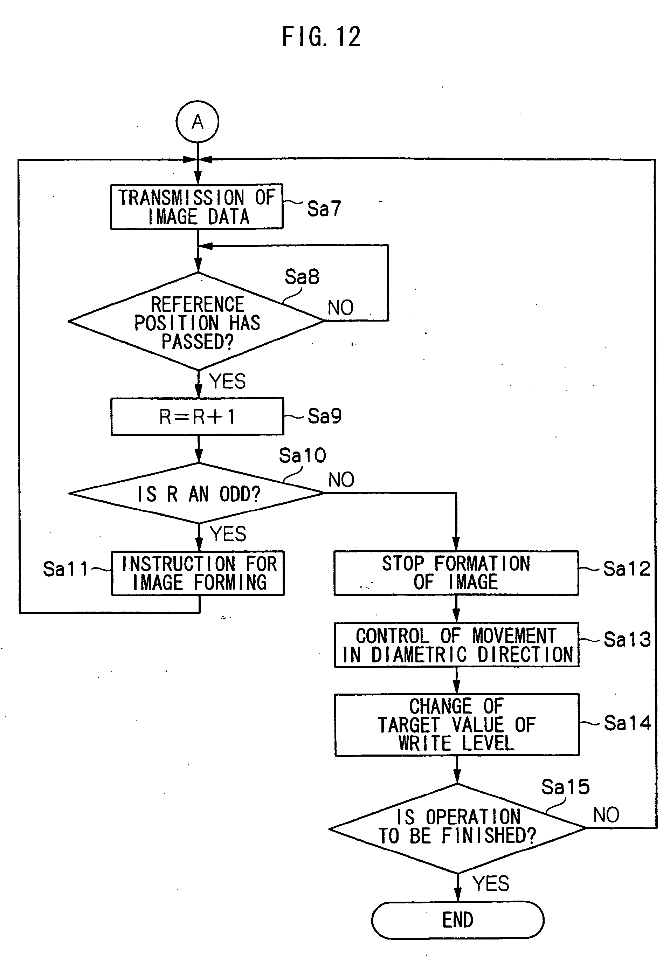

Hereinafter, the operation of the optical disc recording apparatus 100 capable of performing the information recording process and the visible image forming process will be described with reference to Figs. 11 and 12.

First, when the optical disc D is loaded into the optical disc recording apparatus 100, the controller 16 controls the optical pickup 10 and the like to detect the disc format for the optical disc from the surface of the loaded optical disc D opposed to the optical pickup 10. For example, by detecting the existence of a land prepit signal or a prerecord signal in the case of a DVD-R and detecting the existence of an address in a pregroove (ADIP) in the case of a DVD+R, it is determined whether the surface is an information recording surface (information recording layer) (step Sa1). When the information is not detected, it is not recognized as an optical disc.

Here, when the land prepit signal or the precode signal of the DVD-R or the ADIP of the DVD+R is detected from the loaded optical disc D, it is determined that the optical disc D is loaded so that the information recording surface is opposed to the optical pickup 10. Then, the controller 16 controls so as to record recording data supplied from the host PC 110 on the recording surface (step Sa2). The control for recording the recording data is similar to that of the conventional optical disc recording apparatus (DVD-R or DVD+R drive) and thus description thereof will be omitted.

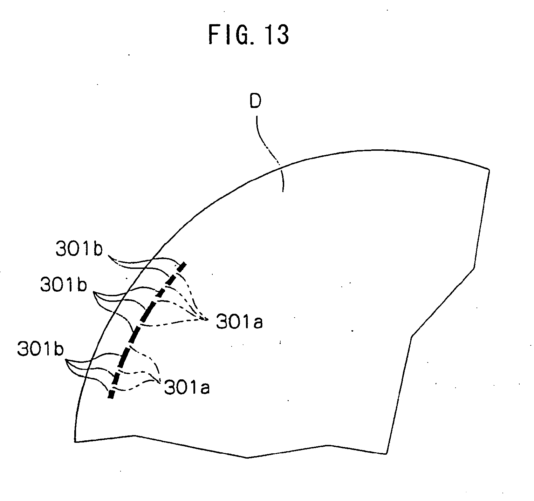

On the other hand, when the prepit signal indicating that it is a drawable optical disc is detected from the set optical disc D, the controller 16 determines that the optical disc D is loaded so that the image recording layer is opposed to the optical pickup 10 and then determines whether the disc ID of the loaded optical disc D can be acquired (step Sa3). The disc ID of the optical disc D may be loaded onto the prepit signal. For example, as shown in Fig. 13, a visible image corresponding to the information obtained by coding the disc ID is written along the outermost circumference of the optical disc D close to the image recording layer. As shown in Fig. 13, by forming a reflective region 301a and a non-reflective region 301b having a length corresponding to the code along the outermost circumference, the disc ID is written to the image recording layer of the optical disc D. The controller 16 acquires the disc ID from the reflected beam by tracing the irradiation position of a laser beam of the optical pickup 10 along the outermost circumference of the optical disc D.

Accordingly, when the reflective region 301a and the non-reflective region 301b corresponding to the disc ID are not formed in the outermost circumference of the image recording layer, it can be determined that the optical disc D is a general optical disc (such as CD-R or DVD-R) not having an image recording layer. In this way, when the disc ID cannot be acquired, the controller 16 determines that it is an optical disc D on which a visible image cannot be formed (step Sa4) and performs a process of notifying a user of the fact.

On the other hand, when the disc ID can be acquired from the optical disc D, the controller waits until an instruction for image forming including image data is input from the host PC 110 (step Sa5). When the image forming instruction is input, the controller 16 performs an initialization control process of forming a visible image on the image recording layer of the optical disc D (step Sa6). More specifically, the controller 16 controls the servo circuit 13 to rotate the spindle motor 11 at a predetermined angular speed, or transmits to the motor controller 32 a command for moving the optical pickup 10 to an initial position on the innermost circumference in the diametric direction of the optical disc D, so as to drive the stepping motor 30.

In this case, in the first aspect of the invention, the initialization control process can be performed as described above so that the information regarding the position of the image drawing prohibited region recorded in the prepit (pregroove) is recognized and the image drawing operation is not performed at the recognized image drawing prohibited region. That is, in the first aspect of the invention, in order not to perform the image drawing operation at the image drawing prohibited region at the time of the initialization, the initial position of the optical pickup 10 is controlled so as to be the innermost circumference of the image drawing region.

In the initialization control process for forming an image, the controller 16 may instruct to the servo circuit 13 a target value of a focus control in which a laser beam having a beam spot diameter larger than that when information is recorded on the recording surface is irradiated to the image recording layer of the optical disc D.

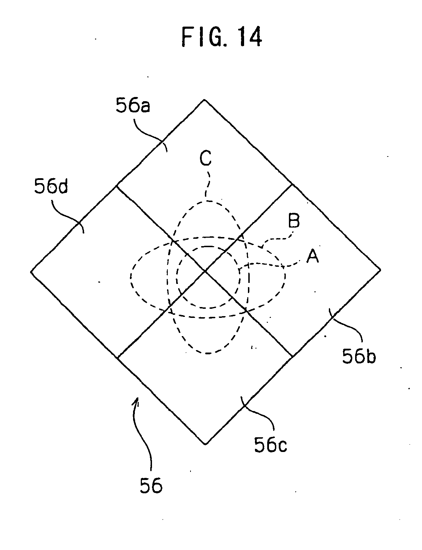

The details of the focus control when the target value is instructed are more specifically described as follows. As described above, the focus control of the servo circuit 13 is performed on the basis of the signal output from the photo-receiving device 56 of the optical pickup 10. At the time of recording information on the recording surface of the optical disc D, the servo circuit 13 drives the focus actuator 64 (see Fig. 4) so that the circular return light (A in Fig. 14) is focused to the centers of four regions 56a, 56b, 56c, and 56d of the photo-receiving device 56 shown in Fig. 14. That is, when the amounts of received beams of the regions 56a, 56b, 56c, and 56d are a, b, c, and d, the focus actuator 64 is driven so as to be (a+c)-(b+d)=0.

On the other hand, when a visible image is formed on the image recording layer of the optical disc D, the focus control is performed so that the laser beam having a diameter larger than that when information is recorded on the recording surface is irradiated to the image recording layer, as described above. When the shape of the returned light received by the photo-receiving device 56 shown in Fig. 14 is elliptical (B or C in the figure), the spot size of the laser beam is larger than that of the circular A. Accordingly, the servo circuit 13 drives the focus actuator 64 so that the elliptical returned light is received by the photo-receiving device 56. That is, the focus actuator 64 is driven so as to satisfy (a+c)-(b+d)=α (where α is not zero). Accordingly, in the present embodiment, the controller 16 and the servo circuit 13 constitute beam spot controlling unlit.

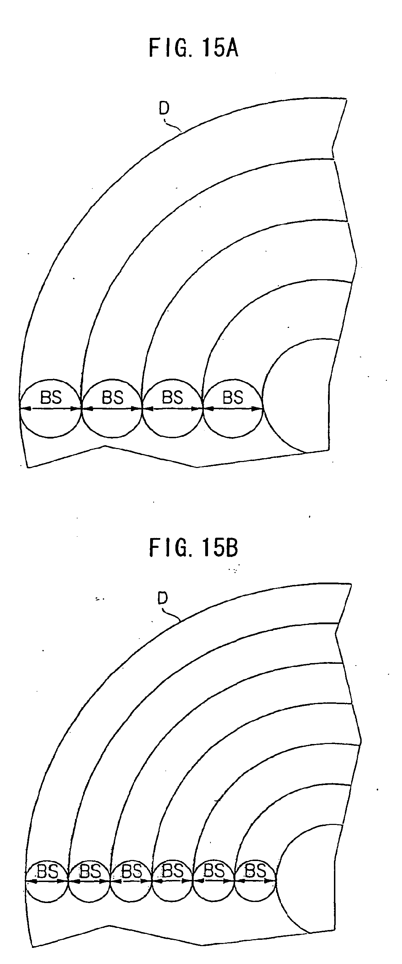

In the initialization control for forming a visible image as described above, since the controller 16 instructs the servo circuit 13 to set α (where α is not zero), the laser beam having a spot diameter larger than that at the time of recording information on the recording surface can be irradiated to the image recording layer of the optical disc D. In this way, when the visible image is formed on the image recording layer of the optical disc D, the following advantages can be obtained by irradiating the laser beam having a spot diameter larger than that at the time of recording information on the recording surface. That is, in the present embodiment, similarly to the time when information is recorded on the recording surface, the laser beam is irradiated while rotating the optical disc D, when the visible image is formed. Accordingly, by enlarging the beam spot diameter of the laser beam, it is possible to form the visible image on the entire region of the image recording layer of the optical disc D in a shorter time. The reason is described with reference to Fig. 15. As schematically shown in the figure, when a case in which the beam spot diameter BS of the laser beam to be irradiated is large (Fig. 15A) is compared with a case in which the beam spot diameter is small (15B), the area of the region as an image forming target at the time of rotating the optical disc D in one turn is larger in the case of the larger beam spot diameter BS. Accordingly, when the beam spot diameter BS is smaller, the optical disc D should be rotated more so as to make the entire region the image forming target (4 turns in the case of the larger beam spot diameter and 6 turns in the case of the smaller beam spot diameter in the shown example), thereby requiring much time for forming an image. For the above-mentioned reason, in the optical disc recording apparatus 100, the laser beam having a spot diameter larger than that at the time of recording information is irradiated at the time of forming a visible image.

In the initialization control for forming an image, the controller 16 instructs target values of levels to the laser power controlling circuit 20 so that the laser beam with the write level and the servo level corresponding to the acquired disc ID is irradiated from the optical pickup 10. That is, the target values to be set as the write level and the servo level are stored in the ROM of the controller 16 depending upon plural kinds of disc IDs, and the controller 16 reads out the target values of the write level and the servo level corresponding to the acquired disc ID and instructs the target values to the laser power controlling circuit 20.

The reason for setting the target value of power depending upon the disc ID is as follows. That is, it is considered that a dye characteristic of the image recording layer is varied depending upon the types of the optical disc D, and when the characteristics are different from each other and a laser beam with certain power is irradiated, a characteristic such as reflectance is naturally varied. Accordingly, even when the reflectance of the irradiation region can be sufficiently varied by irradiating a laser beam with a certain write level to the image recording layer of a certain optical disc D, it cannot be judged that the reflectance of the irradiation region can be varied by irradiating the laser beam with the same write level to the image recording layer of another optical disc D. Accordingly, in the present embodiment, the target values of the write level and the servo level for accurately forming an image are acquired in advance through experiment on each optical disc corresponding to a variety of disc IDs. By storing the acquired target values in the ROM to correspond to the disc IDs, it is possible to perform the optimum power control depending upon the characteristics of the image recording layers of a variety of optical discs D.

When the initialization control described above is performed by the controller 16, a process of forming a visible image on the image recording layer of the optical disc D is actually performed. As shown in Fig. 12, the controller 16 first transmits image data, which have been supplied through the buffer memory 36 from the host PC 110, to the FIFO memory 34 (step Sa7). Then, the controller 16 determines whether a predetermined reference position of the optical disc D rotated by the spindle motor 11 has passed through the laser beam irradiation position of the optical pickup 10, on the basis of the FG pulse signal supplied from the frequency generator 21 (step Sa8).

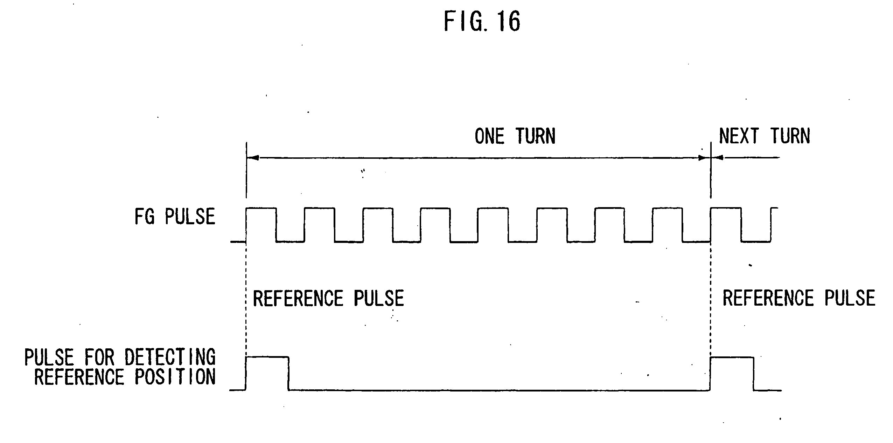

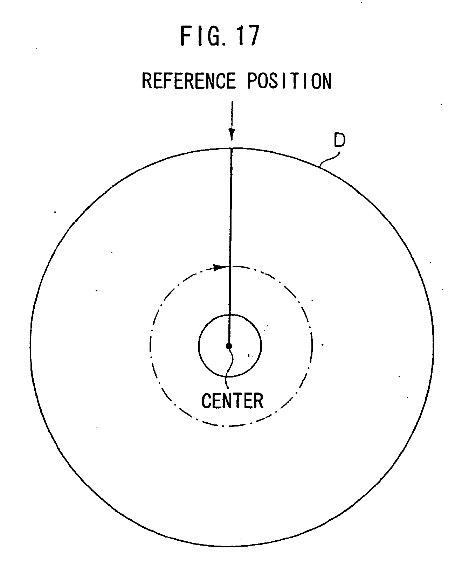

Now, a method of detecting the predetermined reference position and detecting whether the laser beam irradiation position has passed through the predetermined reference position will be described with reference to Figs. 16 and 17. As shown in Fig. 16, the frequency generator 21 outputs a predetermined number (8 in the shown example) of FG pulses while the spindle motor 11 rotates in one turn, that is, while the optical disc D rotates in one turn. Accordingly, the controller 16 outputs a reference position detecting pulse while synchronizing the rising time of one of the FG pulses supplied from the frequency generator 21 with a reference pulse and then generates a reference position detecting pulse signal for outputting the reference position detecting pulse in synchronization with the rising time of the pulse corresponding to one turn (8th pulse in the shown example) from the reference pulse position detecting pulse. By generating the reference position detecting pulse, it is possible to detect that the time when the pulse is generated is the time when the laser beam irradiation position of the optical pickup 10 passes through the reference position of the optical disc D. That is, as shown in Fig. 17, when it is assumed that the laser beam irradiation position of the optical pickup 10 at the time of generating the first reference position detecting pulse is a position indicated by the solid line in the figure (since the optical pickup 10 is movable in the diametric direction, the position which the irradiation position passes through is indicated by a line), the laser beam irradiation position of the optical pickup 10 when the reference position detecting pulse is generated after one turn is naturally located at a position indicated by the solid line in the figure. In this way, the line in the diametric direction including the laser beam irradiation position at the time of first generating the reference position detecting pulse is the reference position, and the controller 16 can detect that the laser beam irradiation position passes through the reference position of the optical disc D on the basis of the reference position detecting pulse signal generated every turn of the optical disc D. The one-dot-chained line in the figure denotes an example of a movement trace of the laser beam irradiation position until the next reference position detecting pulse is generated after a certain reference position detecting pulse is generated. The laser light is irradiated to approximately same tracks on the optical disc in a plurality of times in accordance with the reference position detecting pulse. The "approximately same tracks" are tracks showing nearly concentric circular lines which accord to rotations of the optical disc. The optical pickup 10 is preferably fluctuated in a radial direction of the optical disc during the irradiation. This fluctuation enables increasing the area irradiated with the laser so as to increasing the area for recording visible information. The number of times of the rotation when the irradiation to the approximately same tracks is performed varies depending on the requires contrast. For example, 7 or 8 times of the rotation can be employed when the image drawing is conducted within a minimum time length. Preferable examples of the image drawing method which can be utilized in the invention include that disclosed in JP-A No. 2002-203321, which includes irradiating approximately same tracks on the optical disc in a plurality of times and fluctuating laser light during the irradiation.

When the controller 16 receives the image forming instruction from the host PC 110 and then detects in the above-mentioned way that the reference position of the optical disc D has passed through the laser beam irradiation position, the controller increases the variable R indicating the number of turns by 1 (step Sa9) and then determines whether R is an odd number (step Sa10).

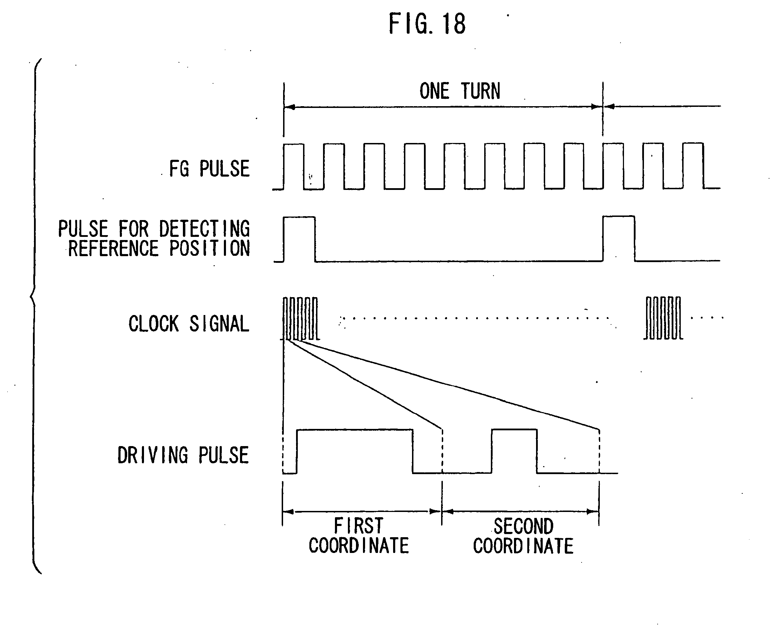

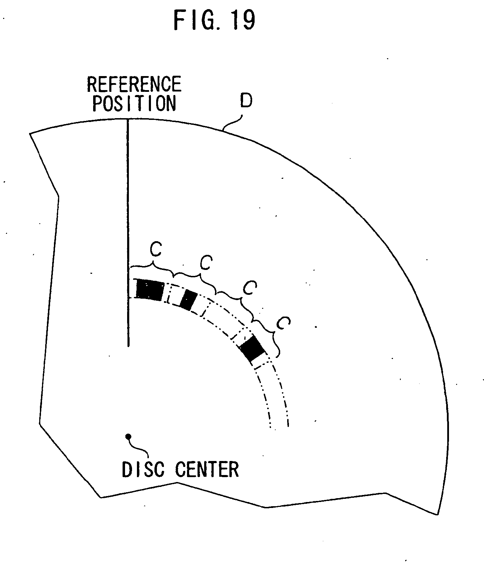

In this case, when the controller receives the image forming instruction and then detects that the reference position has first been passed through, R = 0(initial value)+l = 1. In this case, it is determined in step Sa10 that R is an odd number. In this way, when it is determined that R is an odd number, the controller 16 performs a control for forming a visible image by irradiating a laser beam to the image recording layer of the optical disc D from the optical pickup 10 (step Sa11). More specifically, the controller 16 controls all the units so as to sequentially output image data from the FIFO memory 34 from the time of receiving the reference position detecting pulse in synchronization with a clock signal output from the PLL circuit 33. By means of the control, as shown in Fig. 18, the FIFO memory 34 outputs information indicating a degree of gradation of one coordinate to the driving pulse generator 35 every time when the clock pulse is supplied from the PLL circuit 33, and the driving pulse generator 35 generates a driving pulse with a pulse width corresponding to the degree of gradation indicated by the information and outputs the generated driving pulse to the laser driver 19. As a result, the optical pickup 10 irradiates a laser beam having the write level only for the time corresponding to the degree of gradation of the respective coordinates to the image recording layer of the optical disc D and can form the visible image shown in Fig. 19 by means of a variation in reflectance of the irradiation region.

As schematically shown in the figure, since the optical disc D can be rotated by the spindle motor 11, the laser beam irradiation position of the optical pickup 10 moves along the circumference by the region indicated by C in the figure during one period of the clock signal (a period of time from the rising time of a pulse to the rising time of the next pulse). By changing the time for irradiating the laser beam having the write level in accordance with the degree of gradation while the laser beam irradiation position passes through the region C as described above, it is possible to vary the reflectance of different areas in accordance with the degrees of gradation that are different depending upon the region C as shown in the figure. In this way, by controlling the irradiation time of the laser beam having the write level at the time of passing through the respective regions C in accordance with the degrees of gradation of the coordinates, it is possible to form the visible image corresponding to the image data on the image recording layer of the optical disc D.

When the control for forming the visible image is performed by means of the irradiation of the laser beam controlled in accordance with the image data, the process of the controller 16 is returned to step Sa7, in which the controller transmits the image data supplied from the buffer memory 36 to the FIFO memory 34. The controller detects whether the laser beam irradiation position of the optical pickup 10 has passed through the reference position of the optical disc D, and increases R by 1 when it is detected that the reference position has been passed through. As a result, when R is an even number, the controller 16 controls the respective units so as to stop forming the visible image by the control of the laser beam irradiation (step Sa12). More specifically, the FIFO memory 34 is controlled not to output the information indicating the degrees of gradation of the coordinates to the driving pulse generator 35 in synchronism with the clock signal supplied from the PLL circuit 33. That is, after forming the visible image by irradiating the laser beam having the write level to the image recording layer of the optical disc D, the controller 16 controls so as not to irradiate the laser beam for varying the reflectance of the image recording layer while the optical disc D is rotating in one turn.

When the laser beam irradiation for forming the visible image is thus stopped, the controller 16 instructs the motor controller 32 to move the optical pickup 10 toward the outer circumference in the diametric direction by a predetermined distance (step Sa13), the motor controller 32 drives the stepping motor 30 through the motor driver 31 in accordance with the instruction, and the optical pickup 10 is moved toward the outer circumference by a predetermined distance.

The predetermined distance by which the optical pickup 10 is moved in the diametric direction of the optical disc D can be properly determined in accordance with the beam spot diameter BS (see Fig. 15) irradiated from the optical pickup 10 as described above. That is, when the visible image is formed on the image recording layer of the disk-shaped optical disc D, it is required for forming an image with higher quality that the laser beam irradiation position of the optical pickup 10 is moved on the surface of the optical disc D without any gap. Accordingly, when the unit amount of movement of the optical pickup 10 in the diametric direction is set to a distance almost equal to the beam spot diameter BS of the laser beam irradiated to the optical disc D, the laser beam can be irradiated to the surface of the optical disc D without any gap, thereby forming an image with higher quality. An area larger than the beam spot diameter of the irradiated laser beam may be colored due to a variety of factors such as natures of the image recording layer. In this case, the unit amount of movement can be determined in consideration of the width of the colored area so that the neighboring colored areas do not overlap each other. In the present embodiment, since the beam spot diameter BS is larger (for example, about 20μm) than that at the time of recording information on the recording surface, the controller 16 controls the motor controller 32 to move the optical pickup 10 in the diametric direction by a length almost equal to the beam spot diameter BS, thereby driving the stepping motor 30. Since the modem stepping motor 30 uses a μ step technology, it is possible to control the amount of movement in units of 10μm Accordingly, it is possible to sufficiently move the optical pickup 10 in the diametric direction by units of 20μm by the use of the stepping motor 30.

When performing the control for moving the optical pickup 10 in the diametric direction by a predetermined distance as described above, the controller 16 instructs the target value of the write level, which has been changed at the time of irradiating the laser beam with the write level, to the laser power control circuit 20 so as to change the target value of the write level of the laser beam (step Sa14). In the present embodiment, a CAV method of irradiating the laser beam while rotating the optical disc D at a constant angular speed is employed as a method for forming a visible image, and the linear speed is increased as the optical pickup 10 moves to the outer circumference. Accordingly, when the optical pickup 10 is moved in the diametric direction (to the outer circumference), the laser beam is varied so that the target value of the write level is increased to be larger than that up to that time, and even when the linear speed is varied accordingly, it is possible to irradiate the laser beam with an intensity which can sufficiently vary the reflectance of the image recording layer of the optical disc D.

When the control for moving the optical pickup 10 in the diametric direction and the control for varying the target value of the write level are performed as described above, the controller 16 determines whether non-processed image data for forming a visible image, that is, image data not supplied to the driving pulse generator 35, remain and ends the operation when the image data do not remain.

On the other hand, when non-processed image data not supplied to the motor controller 32 remain, the process of forming a visible image is performed again in step Sa7. That is, the image data are transmitted to the FIFO memory 34 from the controller 16 (step Sa7) and it is determined whether the irradiation position of the laser beam has passed through the reference position of the optical disc D (step Sa8). When the reference position has been passed through, the variable R indicating the number of turns is increased by 1 (step Sa9) and then it is determined whether the increased R is an odd number (step Sa10). Here, when R is odd, the controller 16 controls the respective units to irradiate the laser beam for forming a visible image. When R is even, the controller stops irradiating the laser beam for forming the visible image (the laser beam with the servo level is irradiated) and performs the control for moving the optical pickup 10 in the diametric direction and the control for varying the target value of the write level. That is, when the irradiating of the laser beam (including the write level) for forming an image is performed to the optical disc D during a turn, the controller 16 allows the irradiating of the laser beam for forming an image not to be - performed during the next turn and performs the control for moving the optical pickup 10 in the diametric direction during the turn. By performing the control for moving the optical pickup 10 or the control for varying the target value of the write level during the turn in which the image is not formed, no image is formed while the irradiation position accompanied with the control or the power value of the irradiated laser beam is being varied. Accordingly, after the irradiation position or the intensity of the laser beam is stabilized, it is possible to perform the irradiating of the laser beam for forming an image. Therefore, it is possible to suppress deterioration in quality of the visible image formed by means of the control for moving the optical pickup 10 in the diametric direction.

The main operations of the optical disc recording apparatus 100 are as described above. According to the optical disc recording apparatus 100, by using the units such as the optical pickup 10 used to record information on the recording surface as much as possible without additionally mounting a printing unit, it is possible to form a visible image corresponding to the image data by irradiating the laser beam to the image recording layer of the optical disc D having the image recording layer formed thereon.

Regarding the above operations, while the optical disc having a prepit on which the information regarding the position of the image drawing prohibited region is recorded can be controlled in the first aspect of the invention, an optical disc having no prepit which posesses such information may be controlled such that the image drawing is not performed for the image drawing prohibited region according to another embodiment of the invention.
In other words, the optical disc recording apparatus according to the first aspect of the invention may further include an example in which the information region of the image recording layer of the optical disc is divided in advance into an image drawing region where an image drawing is allowed and an image drawing prohibited region where an image drawing is not allowed, and a controlling means performs controlling of drawing of an image within only the image drawing region.
Another example of the image drawing method according to another embodiment of the first aspect of the invention include previously dividing the formation region of the image recording layer of the optical disc into an image drawing region where an image drawing is allowed and an image drawing prohibited region where an image drawing is not allowed, and a controlling means performs controlling of drawing of an image only within the image drawing region.

In other words, effects similar to those of the optical disc recording apparatus and the image drawing method described above can be also obtained by previously dividing the formation region of the image recording layer into the image drawing region and the image drawing prohibited region and performing a control in such a way that the image drawing is not performed within the image drawing prohibited region while the image drawing is performed only within the image drawing region.

Specifically, when the inner circumferential radius of the formation region of the image recording layer is 20.0 mm, and if the image drawing region is previously set within an inner circumferential radius of 20.5 mm, a region in a range of 20.0 to 20.5 mm is previously set as an image drawing prohibited region.

In the above embodiment that has been described for the optical disc recording apparatus 100, since the laser light irradiation timing is controlled based on a clock signal generated using the FG pulse generated according to the rotation of the spindle motor 11, i.e., a clock signal generated according to the rotation amount of the optical disc D, it is possible to recognize the laser light irradiation position in the optical disc recording apparatus 100 without acquiring information regarding the position or the like from the optical disc D. Therefore, according to the optical disc recording apparatus 100, there is no limitation that the optical disc D must be used only when a certain processing such as formation of the pregroove (or a guide groove) on the image recording layer has been performed. As a result, it is possible to form a visible image corresponding to image data on the image recording layer where the pregroove or the information regarding the position is not previously provided.

Subsequently, information (such as digital information) recording on the information recording layer will be described. When the information recording layer is a dye type, laser light is irradiated from the laser pickup while the optical disc is rotated at a predetermined recording linear velocity. The dye in the information recording layer locally absorbs the irradiated light, and its temperature increases, so that a desired pit is created, and its optical characteristics are changed to record information.

A laser light recording waveform may include one pulse or a pulse stream when one pit is formed. A ratio for the length (of the pit) to be recorded in practice is important.
The laser light pulse width is preferably in a range of 20 to 95%, more preferably in a range of 30 to 90%, and most preferably in a range of 35 to 85% of the length to be recorded in practice. In this case, when the recording wavelength is a pulse stream, the sum of pulses should be within the above range.

While the laser light power varies depending on the recording linear velocity, the laser light power is preferably in a range of 1 to 100 mW, more preferably in a range of 3 to 50 mW, and most preferably in a range of 5 to 20 mW when the recording linear velocity is 3.Sm/s. In addition, when the recording linear velocity is doubled, the laser light power becomes preferably 2^{1/2} times.

In addition, in view of increasing the recording density, the NA of the objective lens used in the pickup is preferably set to 0.55, and more preferably 0.60 and higher.

In the invention, the recording light source can be a semiconductor laser having an oscillating frequency ranged between 350 and 850 nm.

Herein, a case where the information recording layer is a phase change type will be described. The phase change type information recording layer can be configured of aforementioned materials, and may repeat phase change between a crystallization phase and an amorphous phase by irradiating the laser light thereto.
When information is recorded to the phase change type information recording layer, focused laser light pulses are irradiated within a short time to partially melt the phase change recording layer. The melted portion is abruptly cooled by a thermal diffusion, and adhered to form a recording mark in an amorphous state. In addition, when the mark is removed, laser light is irradiated onto the recording mark portion, and the recording mark portion is heated above a crystallization temperature but under a melting point of the information recording layer. Furthermore, a cold removal is performed to crystallize the amorphous recording mark, so that an original blank recording state is restored.

### EXAMPLES

Hereinafter, although the present invention will be described in more detail throughout the examples, the invention is not limited to the following examples.

### Example 1

A substrate (in a thickness of 0.6 mm) having a spiral shaped guide groove was fabricated using a polycarbonate resin through an injection molding. The guide groove had a depth of 130 nm, a half width of 300 nm, and a track pitch of 0.74 μm. A coating liquid (1) was obtained by dissolving 1.50 g of the following dye A into 100 ml of 2,2,3,3-tetrafluoro-1-propanol, and the coating liquid was spin-coated on a surface of the substrate where the guide groove is formed. As a result, an information recording layer having an average thickness of 80 μm was formed. Then, a silver reflective layer was formed on the information recording layer using a sputtering method, so that a first disc was manufactured.

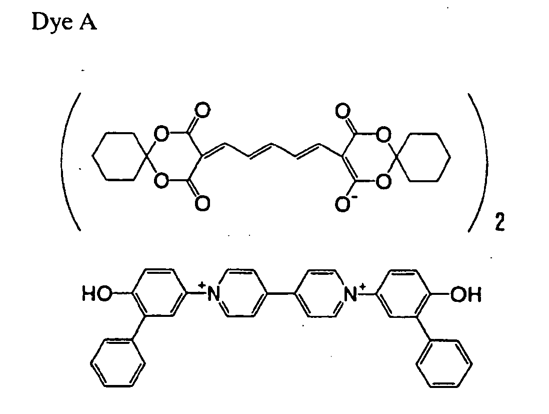

A stamper having a prominence and depression for forming the prepit within a radius range between 21 and 24 mm (e.g., the height of the prominence was adjusted to match with the prepit depth shown in Table 1) and a specular surface in an outer radius range of more than 24 mm was manufactured using a method similar to that for forming a typical CD-ROM stamper. First, the photoresist was spin-coated on a glass disk, and then baked. Then, a laser beam recorder generates a beam corresponding to the signal generated from the formatter and irradiates the beam onto the photoresist for only a region within a radius range of 24 mm or less, and the photoresist was developed. Nickel was sputtered thereon, and then electrocasted, so that the stamper was obtained.

Subsequently, a substrate having a thickness of 0.6 mm was fabricated through an injection molding using a stamper in order to form the image recording layer. The depth and width of the prepit formed by transferring an image using the stamper are shown in the following Table 1.

A coating liquid (2) was obtained by dissolving 1.40 g of a dye B represented by the following chemical formula and 0.60 g of a dye C into100 ml of 2,2,3,3-tetrafluoro-1-propanol. The coating liquid was spin-coated on the substrate to form an image recording layer having a thickness of 0.1 μm. The innermost diameter of the image recording layer formation region (i.e., the innermost circumference of the image recording region) and the like are shown in Table 1. In addition, a second disc was manufactured by forming a silver reflective layer having a thickness of 80 nm on the image recording layer using a sputtering method.

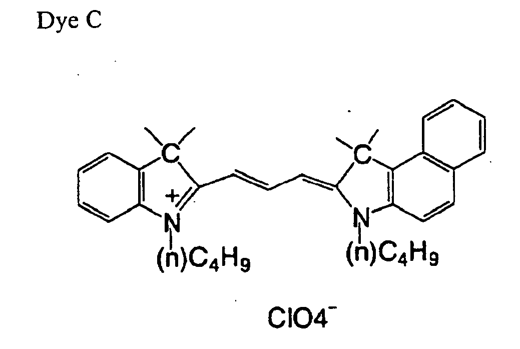

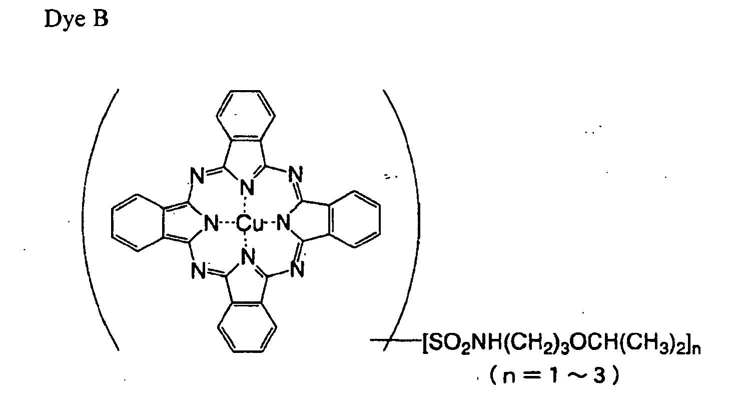

As an adhesive for bonding two discs, a UV curable resin, a Daicure series SD640 (trade name, manufactured by Dainippon Ink and Chemicals, Incorporated.) was injected on the reflective layer of the first disc, and the surface having the reflective layer in the second disc was bonded with the surface having the adhesive injected on the first disc. Then, the bonded discs were strongly pressed from the second disc to diffuse the UV curable resin, and rotated in a high velocity to remove residuals of the adhesive by virtue of a centrifugal force, so that an adhesive layer having a uniform film thickness from the inner circumference to the outer circumference was obtained. In order to cure this adhesive, UV light was irradiated through the second disc. A UV lamp used in this case was a high pressure mercury lamp, and a UV irradiation amount was 0.3 J/cm².

### Examples 2 to 14 and Comparative examples 1 to 4

Optical discs were manufactured in the same manner as Example 1 except that the prepit depth, the half width in a radial direction, and the innermost diameter of the image recording layer were modified as shown in Table 1.

The prepit depth and the half width in a radial direction were obtained by measuring the substrate surface using an AFM. h₁ and h₂ shown in Fig. 2B are obtained by measuring an average thickness of the image recording layer from a transmissive spectrum and an ellipsometer and measuring the prepit depth of the substrate and a surface after the image recording layer is formed using an AFM. The measurement was performed three times to extract the highest value and the smallest value, and an average of them was obtained. The measurement was conducted by using an AFM apparatus SPI3800N/SPA500 (trade name, manufactured by Seiko Instruments Inc.) and a plobe NCH-10V (rade name, manufactured by Veeco Instruments).

### Evaluation of Optical disc

The prepit signal quality of each of the optical disc of the Examples t to 14 and Comparative examples 1 to 4 was tested by reproducing a signal with a laser wavelength of 660 nm using a disc drive. Specifically, the disc drive apparatus was a model No. DDU 1999 (trade name, manufactured by Pulstec Industrial Co., Ltd., having a laser wavelength of 660 nm and a numerical aperture of 0.65). The results are shown Tables 1 and 2.

**Table 1**

| | Ex. * 1 | Ex. * 2 | Ex. * 3 | Ex. * 4 | Ex.* 5 | Ex. * 6 | Ex. * 7 | Ex. * 8 | Ex. * 9 | Ex. * 10 | Ex. * 11 | Ex. * 12 | Ex. * 13 | Ex. * 14 |
|---|---|---|---|---|---|---|---|---|---|---|---|---|---|---|
| Innermost radius in image Recording layer (mm) | 25 | 20 | 20 | 20 | 20 | 20 | 20 | 20 | 20 | 20 | 20 | 20 | 25 | 25 |
| Average prepit depth (nm) | 100 | 150 | 200 | 250 | 300 | 350 | 400 | 200 | 150 | 150 | 400 | 270 | 150 | 200 |
| Average prepit half width W(nm) | 400 | 434 | 392 | 422 | 420 | 423 | 430 | 200 | 420 | 425 | 428 | 500 | 400 | 400 |
| Shortest prepit length in circumferential direction (nm) | 850 | 861 | 797 | 849 | 800 | 820 | 815 | 830 | 840 | 845 | 828 | 830 | 850 | 850 |
| Average thickness of image recording layer h₁(nm) | 0 | 110 | 90 | 70 | 45 | 30 | 25 | 40 | 70 | 100 | 20 | 100 | 0 | 0 |
| Average thickness of image recording layer h₂(nm) | 0 | 130 | 150 | 170 | 195 | 210 | 215 | 160 | 150 | 150 | 200 | 120 | 0 | 0 |
| Reflectance (%) | 60 | 25 | 22 | 18 | 15 | 12 | 10 | 38 | 42 | 35 | 8 | 8 | 55 | 48 |
| Degree of modulation (13/ltop) | 0.95 | 0.30 | 0.48 | 0.70 | 0.75 | 0.80 | 0.82 | 0.22 | 0.23 | 0.28 | 0.90 | 0.90 | 0.95 | 0.96 |
| Degree of modulation (111/ltop) | 0.90 | 0.28 | 0.46 | 0.68 | 0.73 | 0.78 | 0.79 | 0.20 | 0.22 | 0.27 | 0.88 | 0.89 | 0.92 | 0.93 |
| 3T pit jitter (ns) | 35 | 45 | 43 | 38 | 39 | 47 | 50 | 57 | 52 | 50 | 54 | 58 | 33 | 38 |
| 3T rand jitter (ns) | 33 | 47 | 42 | 37 | 38 | 46 | 51 | 60 | 55 | 53 | 53 | 58 | 31 | 37 |
| 11T pit jitter(ns) | 32 | 50 | 43 | 48 | 38 | 49 | 50 | 59 | 55 | 53 | 54 | 59 | 30 | 34 |
| 11T rand jitter (ns) | 34 | 52 | 45 | 40 | 41 | 50 | 51 | 60 | 57 | 53 | 53 | 60 | 31 | 36 |
| h₁/h₂ | - | 0.85 | 0.60 | 0.41 | 0.23 | 0.14 | 0.12 | 0.25 | 0.47 | 0.67 | 0.10 | 0.83 | - | - |
| hₚ+h₁-h₂(nm) | - | 130 | 140 | 150 | 150 | 170 | 210. | 80 | 70 | 100 | 220 | 250 | - | - |

| | | | | | | | | | | | | | | |
|---|---|---|---|---|---|---|---|---|---|---|---|---|---|---|
| *Ex: Example | | | | | | | | | | | | | | |

**Table 2**

| | Comparative Example 1 | Comparative Example 2 | Comparative Example 3 | Comparative Example 4 |
|---|---|---|---|---|
| innermost radius in image Recording layer (mm) | 25 | 20 | 20 | 20 |
| Average prepit depth (nm) | 200 | 100 | 410 | 280 |
| Average prepit half width W(nm) | 190 | 420 | 430 | 510 |
| Shortest prepit length in circumferential direction (nm) | 840 | 834 | 800 | 830 |
| Average thickness of image recording layer h₁(nm) | 40 | 80 | 50 | 110 |
| Average thickness of image recording layer h₂ (nm) | 180 | 120 | .200 | 120 |
| Reflectance (%) | 22 | 50 | 6 | 5 |
| Degree of modulation (13/Itop) | 0.10 | 0.10 | 0.90 | 0.92 |
| Degree of modulation (111/Itop) | 0.10 | 0.10 | 0.89 | 0.90 |
| 3T pit jitter (ns) | (unable to measure) | (unable to measure) | 62 | (unable to measure) |
| 3T rand jitter (ns) | (unable to measure) | (unable to measure) | 63 | (unable to measure) |
| 11T pit jitter(ns) | (unable to measure) | (unable to measure) | 65 | (unable to measure) |
| 11T rand jitter (ns) | (unable to measure) | (unable to measure) | 68 | (unable to measure) |
| h₁/h₂ | 0.22 | 0.67 | 0.25 | 0.92 |
| hₚ + h₁ - h₂ (nm) | 60 | 60 | 260 | 270 |

From the results shown in Tables 1 and 2, it was recognized that the optical discs according to the Examples enable easily detecting information relating to the drawing images. Further, the 3T pit jitter, the 3T pit rand, the 11T pit jitter and the 11T pit rand, which are indexes of quality of reproduced signal of a prepit, is particularly excellent in cases where the average prepit depth (hₚ) is in the range of 150 to 350 nm and the [hₚ + h₁ - h₂] is in the range of 130 to 170 nm. The jitter is a standard deviation showing variations of a signal. In a case where the jitter is large, a reading error such as one in which a 3T signal is detected as a 4T signal, may be caused. When the reading error occurs in a low frequency because the error can be corrected, and thus there is no substantial problem in reading out information provided to a prepit. However, when the reading error occurs in a high frequency, accurate reading of information provided to a prepit becomes difficult, and problems such as a failure in disc recognition may occur.

### Industrial applicability of the Invention

The invention provides: an optical disc having an image recording layer which includes, at an inner side of an image drawing region of the image recording layer, an image drawing prohibited region where drawing of an image is prohibited; an image drawing method; and an apparatus for drawing a visual image to the optical disc.
The invention further provides a method for processing a signal which enables obtaining information provided to the prepit by decoding a prepit signal even if a polarity of the prepit signal is opposite to a polarity of a decoding standard thereof, and an apparatus for processing a signal which performs the method for processing a signal.
The invention further provides an optical disc which enables easy detection of a signal related to an image drawing, a stamper for efficiently forming the optical disc, a method for manufacturing the optical disc, a method for processing a signal which enables obtaining information provided to a prepit in the optical disc by decoding a prepit signal, and an apparatus for performing the method for processing a signal.
The invention further provides a method for performing a higher quality of drawing of a visual image onto an optical disc having an image recording layer onto which the visual image can be drawn by irradiation of laser light, an apparatus for drawing a visual image by applying the method for performing a higher quality of drawing of a visual image, and the optical disc.

- 10:: OPTICAL PICKUP
- 11:: SPINDLE MOTOR (ROTATION DRIVING UNIT)
- 12:: RF AMP
- 13:: SERVO CIRCUIT
- 16:: CONTROLLER
- 17:: ENCODER
- 18:: STRATEGY CIRCUIT
- 19:: LASER DRIVER
- 20:: LASER POWER CONTROL CIRCUIT
- 21:: FREQUENCY GENERATOR 21
- 30:: STEPPING MOTOR
- 31:: MOTOR DRIVER
- 32:: MOTOR CONTROLLER
- 33:: PLL CIRCUIT
- 34:: FIFO MEMORY 34
- 35:: DRIVING PULSE GENERATOR
- 36:: BUFFER MEMORY
- 53:: LASER DIODE
- 53A:: FRONT MONITOR DIODE
- 56:: PHOTO-RECEIVING DEVICE
- 64:: FOCUS ACTUATOR
- 65:: TRACKING ACTUATOR
- 100:: OPTICAL DISC RECORDING APPARATUS
- 320:: ENCODER
- D:: OPTICAL DISC
- 500:: OPTICAL DISC
- 512:: FIRST SUBSTRATE
- 514:: INFORMATION RECORDING LAYER
- 516:: FIRST REFLECTIVE LAYER
- 520:: FIRST LAMINATION BODY
- 522:: SECOND SUBSTRATE
- 524:: IMAGE RECORDING LAYER
- 526:: SECOND REFLECTIVE LAYER
- 528:: SECOND LAMINATION BODY
- 530:: ADHESIVE LAYER
- 600:: PREPIT
- 602:: IMAGE RECORDING LAYER FORMATION REGION
- 702:: PRINT REGION
- 704:: INFORMATION REGION
- 706:: INFORMATION RECORDING REGION
- 720:: SUBSTRATE
- 301a:: REFLECTIVE REGION
- 301b:: NON-REFLECTIVE REGION

## Claims

1. An optical disc comprising a substrate (522) and an image recording layer (524) onto which a visual image can be drawn by irradiation of laser light having a wavelength of 600 to 700 nm and which is formed on the substrate (522), wherein the substrate comprises prepits (600) provided on a surface of the substrate (522) on which the image recording layer (524) is formed, a ratio (h₁/h₂) of an average thickness (h₁) of the image recording layer at a convex portion of the prepits relative to an average thickness (h₂) of the image recording layer (524) at a concave portion of the prepits is in a range of 0.1 to 0.9, and a depth recording layer at a concave portion of the prepits is in a range of 0.1 to 0.9, and a depth (hₚ+h₁-h₂) of depression of the image recording layer at the concave portion of the prepits is in a range of 70 to 250 nm.

2. The optical disc according to claim 1, wherein an average depth (hₚ) of the prepits is in a range of 100 to 400 nm.

3. The optical disc according to claim 1 or 2, wherein an average half width (W) of the prepits is in a range of 200 to 500 nm.

4. The optical disc according to any one of claims 1 to 3, wherein the image recording layer comprises a dye compound.

5. The optical disc according to any one of claims 1 to 3, wherein the image recording layer is formed by spin coating a liquid comprising a dye compound.

6. The optical disc according to any one of claims 1 to 3, wherein the image recording layer (524) is a layer at which visual information is recorded by irradiating the laser light to substantially the same tracks a plurality of times, and the recording of the visual information is conducted by detecting returned light generated after the irradiation of the laser light to the prepits (600).

7. The optical disc according to any one of claims 1 to 3, wherein the image recording layer is a layer at which visual information is recorded by irradiating the laser light to substantially the same tracks a plurality of times while oscillating the laser light in a radial direction, and the recording of the visual information is conducted by detecting returned light generated after the irradiation of the laser light to the prepits.

8. The optical disc according to any one of claims 1 to 7, wherein the laser is directed to DVD application.

9. The optical disc according to any of claims 1 to 8, wherein the laser is emitted from a laser source having a numerical aperture of 0.65.

10. A method for forming an optical disc comprising:
preparing a stamper;
preparing, by using the stamper, a substrate which has prepits on a surface on which an image recording layer is to be provided; and
forming the image recording layer on the surface of the substrate, wherein a visual image can be drawn onto the image recording layer by irradiation of laser light having a wavelength of 600 to 700 nm,
wherein a ratio (h₁/h₂) of an average thickness (h₁) of the image recording layer at a convex portion of the prepits relative to an average thickness (h₂) of the image recording layer (524) at a concave portion of the prepits is in a range of 0.1 to 0.9, and a depth (hₚ + h₁-h₂) of depression of the image recording layer at the concave portion of the prepits is in a range of 70 to 250 nm.

## Patentansprüche

1. Optische Platte, umfassend ein Substrat (522) und eine Bildaufzeichnungsschicht (524), auf der ein visuelles Bild mittels Aufstrahlen von Laserlicht mit einer Wellenlänge von 600 bis 700 nm gezeichnet werden kann, und die auf dem Substrat (522) ausgebildet ist, wobei das Substrat auf einer Oberfläche des Substrats (522), auf der die Bildaufzeichnungsschicht (524) ausgebildet ist, Vorvertiefungen (600) aufweist, ein Verhältnis (h₁/h₂) einer durchschnittlichen Dicke (h₁) der Bildaufzeichnungsschicht an einem konvexen Bereich der Vorvertiefungen relativ zu einer durchschnittlichen Dicke (h₂) der Bildaufzeichnungsschicht (524) in einem konkaven Bereich der Vorvertiefungen im Bereich von 0,1 bis 0,9 liegt, und eine Tiefe (hₚ + h₁ - h₂) von Ausnehmungen der Bildaufzeichnungsschicht in dem konkaven Bereich der Vorvertiefungen im Bereich von 70 bis 250 nm liegt.

2. Optische Platte nach Anspruch 1, bei der eine durchschnittliche Tiefe (hₚ) der Vorvertiefungen in einem Bereich von 100 bis 400 nm liegt.

3. Optische Platte nach Anspruch 1 oder 2, bei der eine durchschnittliche Halbwärtsbreite (W) der Vorvertiefungen in einem Bereich von 200 bis 500 nm liegt.

4. Optische Platte nach einem der Ansprüche 1 bis 3, bei der die Bildaufzeichnungsschicht eine Farbstoffverbindung aufweist.

5. Optische Platte nach einem der Ansprüche 1 bis 3, bei der die Bildaufzeichnungsschicht durch Spin-Coating mit einer die Farbstoffverbindung aufweisenden Flüssigkeit gebildet ist.

6. Optische Platte nach einem der Ansprüche 1 bis 3, bei der die Bildaufzeichnungsschicht (524) eine Schicht ist, in der visuelle Information aufgezeichnet ist durch mehrmaliges Aufstrahlen des Laserlichts auf im Wesentlichen die selben Spuren, und der Aufzeichnung der visuellen Information durchgeführt wird durch Nachweisen von Rückkehrlicht, welches nach der Aufstrahlung des Laserlichts auf die Vorvertiefungen (600) erzeugt wird.

7. Optische Platte nach einem der Ansprüche 1 bis 3, bei der die Bildaufzeichnungsschicht eine Schicht ist, in der visuelle Information aufgezeichnet ist durch mehrmaliges Aufstrahlen des Laserlichts auf im Wesentlichen die selben Spuren, während das Laserlicht in radialer Richtung oszilliert, und die Aufzeichnung der visuellen Information durchgeführt wird durch Nachweisen von Rückkehrlicht, welches nach der Aufstrahlung des Laserlichts auf die Vorvertiefungen erzeugt wird.

8. Optische Platte nach einem der Ansprüche 1 bis 7, bei der der Laser für eine DVD-Anwendung ausgerichtet ist.

9. Optische Platte nach einem der Ansprüche 1 bis 8, bei dem der Laser von einer Laserquelle mit einer numerischen Apertur von 0,65 emittiert wird.

10. Verfahren zum Herstellen einer optischen Platte, umfassend:
Vorbereiten eines Stempels;
Vorbereiten - unter Verwendung des Stempels - eines Substrats mit Vorvertiefungen auf einer Oberfläche, auf der eine Bildaufzeichnungsschicht vorzusehen ist; und
Ausbilden der Bildaufzeichnungsschicht auf der Oberfläche des Substrats, wobei ein sichtbares Bild auf der Bildaufzeichnungsschicht gezeichnet werden kann durch Aufstrahlen von Laserlicht mit einer Wellenlänge von 600 bis 700 nm,
wobei ein Verhältnis (h₁/h₂) einer durchschnittlichen Dicke (h₁) der Bildaufzeichnungsschicht in einem konvexen Bereich der Vorvertiefungen relativ zu einer durchschnittlichen Dicke (h₂) der Bildaufzeichnungsschicht (524) in einem konkaven Bereich der Vorvertiefungen in einem Bereich von 0,1 bis 0,9 liegt, und eine Tiefe (hₚ + h₁ - h₂) eine Ausnehmung der Bildaufzeichnungsschicht in dem konkaven Bereich der Vorvertiefungen in einem Bereich von 70 bis 250 nm liegt.

## Revendications

1. Disque optique comprenant un substrat (522) et une couche d'enregistrement d'image (524) sur laquelle peut être dessinée une image visuelle par irradiation par une lumière laser ayant une longueur d'onde de 600 nm à 700 nm et qui est formée sur le substrat (522) dans lequel le substrat comprend des pré-creux (600) disposés sur la surface du substrat (522) sur laquelle est formée la couche d'enregistrement d'image (524), le rapport (h₁/h₂) entre l'épaisseur moyenne (h₁) de la couche d'enregistrement d'image dans une partie convexe des pré-creux et l'épaisseur moyenne (h₂) de la couche d'enregistrement d'image (524) dans une partie concave des pré-creux est compris entre 0,1 et 0,9 et la profondeur (hₚ+h₁+h₂) de la dépression de la couche d'enregistrement d'image dans la partie concave des pré-creux est comprise entre 70 nm et 250 nm.

2. Disque optique selon la revendication 1, dans lequel la profondeur moyenne (hₚ) des pré-creux est comprise entre 100 nm et 400 nm.

3. Disque optique selon la revendication 1 ou 2, dans lequel la demi-largeur moyenne (W) des pré-creux est comprise entre 200 nm et 500 nm.

4. Disque optique selon l'une quelconque des revendications 1 à 3, dans lequel la couche d'enregistrement d'image comprend un composé colorant.

5. Disque optique selon l'une quelconque des revendications 1 à 3, dans lequel la couche d'enregistrement d'image est formée par dépôt par centrifugation d'un liquide comprenant un composé colorant.

6. Disque optique selon l'une quelconque des revendications 1 à 3, dans lequel la couche d'enregistrement d'image (524) est une couche sur laquelle sont enregistrées des informations visuelles par irradiation par lumière laser sensiblement des mêmes pistes une pluralité de fois et l'enregistrement des informations visuelles est effectué en détectant la lumière réfléchie générée après irradiation des pré-creux (600) par la lumière laser.

7. Disque optique selon l'une quelconque des revendications 1 à 3, dans lequel la couche d'enregistrement d'image est une couche sur laquelle sont enregistrées des informations visuelles par irradiation par lumière laser sensiblement des mêmes pistes une pluralité de fois en faisant osciller la lumière laser dans la direction radiale et l'enregistrement des informations visuelles est effectué en détectant la lumière réfléchie générée après irradiation des pré-creux par la lumière laser.

8. Disque optique selon l'une quelconque des revendications 1 à 7, dans lequel le laser est orienté vers une application de DVD.

9. Disque optique selon l'une quelconque des revendications 1 à 8, dans lequel le laser est émis par une source laser ayant une ouverture numérique de 0,65.

10. Procédé de formation d'un disque optique comprenant :
la préparation d'un poinçon ;
la préparation, en utilisant le poinçon, d'un substrat sur la surface duquel se trouvent des pré-creux, où doit être disposée une couche d'enregistrement d'image ; et
la formation de la couche d'enregistrement d'image sur la surface du substrat, dans lequel une image visuelle peut être dessinée sur la couche d'enregistrement d'image par irradiation par une lumière laser ayant une longueur d'onde de 600 nm à 700 nm,
dans lequel le rapport (h₁/h₂) entre l'épaisseur moyenne (h₁) de la couche d'enregistrement d'image dans une partie convexe des pré-creux et l'épaisseur moyenne (h₂) de la couche d'enregistrement d'image (524) dans une partie concave des pré-creux est compris entre 0,1 et 0,9 et la profondeur (hₚ+h₁+h₂₎ de la dépression de la couche d'enregistrement d'image dans la partie concave des pré-creux est comprise entre 70 nm et 250 nm.
